# EUROPÄISCHE PATENTSCHRIFT

(11) **EP 3 956 406 B1**
(45) Veröffentlichungstag und Bekanntmachung des Hinweises auf die Patenterteilung: **27.08.2025**
(21) Anmeldenummer: 20711208.7
(22) Anmeldetag: 20.03.2020
(51) Int. Cl.: C09D 5/08, C09D 5/44, C25D 13/12, C25D 13/18, C25D 13/22, C09G 1/02

(54) **WÄSSRIGE BESCHICHTUNGSZUSAMMENSETZUNG ZUR TAUCHLACK-BESCHICHTUNG ELEKTRISCH LEITFÄHIGER SUBSTRATE ENTHALTEND BISMUT SOWIE LITHIUM**
AQUEOUS COATING COMPOSITION FOR DIP COATING ELECTRICALLY CONDUCTIVE SUBSTRATES CONTAINING BISMUTH AND LITHIUM
COMPOSITION AQUEUSE DE REVÊTEMENT DESTINÉE AU REVÊTEMENT DE LAQUAGE PAR TREMPAGE DES SUBSTRATS ÉLECTRO-CONDUCTEURS CONTENANT DU BISMUTH AINSI QUE DU LITHIUM

(30) Priorität: 15.04.2019 EP 19169240
(43) Veröffentlichungstag der Anmeldung: 23.02.2022
(73) Patentinhaber: BASF Coatings GmbH, 48165 Münster (DE)
(72) Erfinder: GELBRICH, Thorsten, 48165 Muenster (DE); KEIL, Patrick, 48165 Muenster (DE); HOENE, Andrea, 48165 Muenster (DE); BROSSEIT, Andre, 48165 Muenster (DE); MUEHLMEYER, Justina, 48165 Muenster (DE); HEMKER, Susanne, 48165 Muenster (DE); TOBOLL, Petra, 48165 Muenster (DE); FITTKOW, Nina, 48165 Muenster (DE)
(74) Vertreter: BASF IP Association
(86) Internationale Anmeldenummer: PCT/EP2020/057762
(87) Internationale Veröffentlichungsnummer: WO 2020/212074

(56) Entgegenhaltungen:
- EP-A1- 0 079 629
- WO-A1-2015/070931
- DE-A1- 102017 210 358

## Beschreibung

Die vorliegende Erfindung betrifft eine wässrige Beschichtungszusammensetzung (A) umfassend wenigstens ein kathodisch abscheidbares Bindemittel (A1), wenigstens ein Vernetzungsmittel (A2), eine Gesamtmenge von wenigstens 100 ppm Bi (A3), bezogen auf das Gesamtgewicht von (A) sowie Lithium (A4), in einer in (A) gelösten Form, wobei dieses Lithium einen Anteil von 300 ppm, bezogen auf das Gesamtgewicht der Beschichtungszusammensetzung (A), nicht überschreitet. Die wässrige Beschichtungszusammensetzung (A) ist insbesondere zur zumindest teilweisen Beschichtung eines elektrisch leitfähigen Substrats, das heißt also insbesondere als Elektrotauchlack, geeignet. Die vorliegende Erfindung betrifft auch ein Verfahren zur Herstellung von (A), ein Verfahren zur Beschichtung eines elektrisch leitfähigen Substrats mit einer Beschichtungszusammensetzung (A) sowie ein gemäß diesem Verfahren erhältliches beschichtetes Substrat.

Im Automobilbereich müssen die zur Herstellung eingesetzten metallischen Bauteile üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Nachteilig an den bekannten Beschichtungsverfahren, insbesondere an den bekannten in der Automobilindustrie eingesetzten Verfahren, ist, dass diese Verfahren üblicherweise einen Konversionsbeschichtungsschritt, beispielsweise einen Phosphatierungsschritt, als Vorbehandlung vorsehen, in dem das zu beschichtende Substrat nach einem optionalen Reinigungsschritt und vor einem Tauchlackierungsschritt mit einer Konversionsbeschichtung ausgestattet wird, um einen ausreichenden Korrosionsschutz zu gewährleisten. Im Falle der Phosphatierung erfolgt dabei die Behandlung mit einem Metallphosphat wie Zinkphosphat. Diese Vorbehandlung beinhaltet üblicherweise die Durchführung mehrerer Verfahrensschritte in mehreren verschiedenen und unterschiedlich beheizten Tauchbecken. Zudem fallen bei der Durchführung einer solchen Vorbehandlung Abfallschlämme an, die die Umwelt belasten und entsorgt werden müssen. Es ist daher insbesondere aus ökonomischen und ökologischen Gründen wünschenswert, einen solchen Vorbehandlungsschritt einsparen zu können, aber dennoch zumindest die gleiche Korrosionsschutzwirkung zu erzielen, die mit den bekannten Verfahren erzielt wird.

EP 2 405 035 A1 und JP 2011-057944 A offenbaren jeweils eine elektrophoretisch abscheidbare Beschichtungszusammensetzung, die 100 bis 1000 ppm beziehungsweise 100 bis 5000 ppm an trivalenten Bismut-Ionen und eine Aminopolycarbonsäure in der 0,5 bis 10-fachen beziehungsweise 0,1 bis 5-fachen molaren Konzentration, jeweils bezogen auf die molare Konzentration der trivalenten Bismut-Ionen, enthält. Die trivalenten Bismut-Ionen liegen dabei in den darin offenbarten Beschichtungszusammensetzungen in gelöster Form vor. Nachteilig an den aus EP 2 405 035 A1 und JP 2011-057944 A bekannten Beschichtungszusammensetzungen ist jedoch, dass zunächst in einem separaten vorgelagerten Verfahrensschritt eine entsprechende wasserlösliche Bismut-haltige Verbindung, welche zur Freisetzung der trivalenten Bismut-Ionen befähigt ist, ausgehend von wasserunlöslichen Bismut-Precursor-Verbindungen wie Bismutoxid und geeigneten Aminopolycarbonsäuren als Komplexierungsmittel hergestellt werden muss. Diese so hergestellte wasserlösliche Bismut-haltige Verbindung wird erst dann der Beschichtungszusammensetzung zugesetzt. Solche in Wasser gelösten Bismut-Salze, welche nach ihrer Herstellung in eine bei Anlegen einer Spannung in einem Bereich von 100-400 V elektrophoretisch abscheidbare Beschichtungszusammensetzung gegeben werden, sind zudem aus EP 1 000 985 A1 bekannt. Auch im Patent US 5,908,912 werden ähnliche Systeme beschrieben, wobei hier die löslichen Bi-haltigen Verbindungen unter Einsatz von Aminosäuren und Aminosäure-Precursorverbindungen erzeugt werden.

Kathodisch abscheidbare Bismut-haltige Beschichtungszusammensetzungen, die in einem einstufigen Beschichtungsschritt auf ein geeignetes Substrat abgeschieden werden können, sind beispielsweise aus WO 2009/021719 A2, WO 2004/018580 A1, WO 2004/018570 A2, EP 0 642 558 B2 sowie WO 95/07319 A1 bekannt: Der Zusatz von wasserunlöslichem Bismut-Subnitrat in elektrophoretisch abscheidbaren Beschichtungszusammensetzungen ist dabei aus WO 2009/021719 A2 bekannt. Das eingesetzte Bismut-Subnitrat fungiert dabei als Vernetzungskatalysator. Aus WO 2004/018580 A1 ist der Einsatz von wasserunlöslichem Bismut-Subsalicylat in Beschichtungszusammensetzungen bekannt. Ein Einsatz von Bismut-Subsalicylat oder Bismut-Ethylhexanoat in Beschichtungszusammensetzungen als Bakterizid wird in WO 2004/018570 A2 beschrieben. Wasserlösliche Bismut-Verbindungen sind zudem aus EP 0 642 558 B2 sowie WO 95/07319 A1 bekannt.

WO 2015/070930 A1 beschreibt einen Elektrotauchlack sowie ein insbesondere zweistufiges Beschichtungsverfahren eines elektrisch leitfähigen Substrats mit dem Elektrotauchlack. Der Elektrotauchlack enthält dabei Bi in sowohl gelöster als auch ungelöster Form. Erhalten werden Elektrotauchlackierungen, die trotz des Verzichts auf eine in der Regel bei metallischen Substraten durchgeführte und für den Korrosionsschutz als obligat erachtete Konversionsbeschichtung (meist Phosphatierung) eine bereits sehr gute korrosionsinhibierende Wirkung aufweisen.

Die EP 0 076 929 A1 beschreibt Elektrotauchlacke und Primer. Sie nennt als KatalysatorKomponenten beispielsweise Acetate, Formiate und Carbonate von Pb, Zn, Fe, Li, Cd und Bi und erwähnt, dass diese Komponenten zum Beispiel in Primern zur Verbesserung der Korrosionsbeständigkeit eingesetzt werden können.

Trotzdem besteht nach wie vor ein Bedarf an elektrophoretisch abscheidbaren Beschichtungszusammensetzungen zur Beschichtung von elektrisch leitfähigen Substraten mit einem Elektrotauchlack, welche - insbesondere im Hinblick auf eine Einsparung des üblicherweise durchgeführten Phosphatierungsschritts als Vorbehandlung - eine hervorragende und insbesondere auf unterschiedlichen Metallsubstraten hervorragende Korrosionsschutzwirkung aufweisen. Die Vorteile eines wegen des Verzichts auf die Phosphatierung ökonomisch und ökologisch vorteilhaften Beschichtungsverfahrens sollten also mit einem gegenüber den in WO 2015/070930 A1 beschriebenen Systemen nochmals verbesserten Korrosionsschutz kombiniert werden.

WO 2010/112605 A1 beschreibt eine bei niedrigen Temperaturen härtbare Beschichtungszusammensetzung, welche ein Lithiumsalz enthält. Der Anteil des Lithiumsalzes liegt in Größenordnungen um mehrere Gewichtsprozent, bezogen auf die Gesamtmenge der Zusammensetzung. Elektrophoretisch abscheidbare Zusammensetzungen sind nicht beschrieben.

Aufgabe der vorliegenden Erfindung ist es daher, eine kathodisch abscheidbare Beschichtungszusammensetzung zur Beschichtung eines elektrisch leitfähigen Substrats zur Verfügung zu stellen, welche gegenüber den aus dem Stand der Technik bekannten Beschichtungszusammensetzungen Vorteile aufweist. Insbesondere ist es eine Aufgabe der vorliegenden Erfindung, solche Beschichtungszusammensetzungen zur Verfügung zu stellen, die ein ökonomischeres und/oder ökologischeres Beschichtungsverfahren als herkömmliche eingesetzte Beschichtungszusammensetzungen ermöglichen. Insbesondere ist es zudem eine Aufgabe der vorliegenden Erfindung, ein solches Verfahren bereitzustellen, welches eine ökonomischere und/oder ökologischere Beschichtung als herkömmliche Beschichtungsverfahren ermöglicht, das heißt welches es beispielsweise ermöglicht, auf die üblicherweise noch vor einer Tauchlackierung mittels eines Metallphosphats durchzuführende Phosphatierung zu verzichten, aber mit welchem dennoch eine nochmals verbesserte Korrosionsschutzwirkung auch auf unterschiedlichen Substraten erzielt werden kann. Dabei ist zudem darauf zu achten, dass die kathodische Abscheidung der Zusammensetzung gut durchführbar ist und auch die Härtung auf für kathodische Elektrotauchlackierungen typische Art und Weise erfolgen kann.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher eine wässrige Beschichtungszusammensetzung (A) zur zumindest teilweisen Beschichtung eines elektrisch leitfähigen Substrats mit einem Elektrotauchlack, umfassend
(A1) wenigstens ein kathodisch abscheidbares Harz als Bindemittel,
(A2) wenigstens ein Vernetzungsmittel,
(A3) wenigstens 100 ppm Bismut, bezogen auf das Gesamtgewicht der Beschichtungszusammensetzung (A),
dadurch gekennzeichnet, dass
(A4) die Beschichtungszusammensetzung Lithium, in einer in (A) gelösten Form, enthält, wobei dieses Lithium einen Anteil von 300 ppm, bezogen auf das Gesamtgewicht der Beschichtungszusammensetzung (A), nicht überschreitet.

Die erfindungsgemäße wässrige Beschichtungszusammensetzung (A) dient somit insbesondere zur Herstellung einer Elektrotauchlackschicht auf einer Substratoberfläche eines elektrisch leitfähigen Substrats.

Weitere erfindungsgemäße Gegenstände, beispielsweise Verfahren und Verwendungen, die von der erfindungsgemäßen Beschichtungszusammensetzung Gebrauch machen, ergeben sich aus der nachstehenden Offenbarung, insbesondere der Beschreibung und den Ansprüchen.

Es wurde überraschend gefunden, dass es die erfindungsgemäße wässrige Beschichtungszusammensetzung (A), insbesondere wenn diese in einem Verfahren zur Beschichtung eines elektrisch leitfähigen Substrats mit einem Elektrotauchlack eingesetzt wird, ermöglicht, auf den üblicherweise vor der Tauchlackierung, insbesondere Elektrotauchlackierung, durchzuführenden erforderlichen Schritt einer Vorbehandlung des zumindest teilweise zu beschichtenden elektrisch leitfähigen Substrats mit einem Metallphosphat wie Zinkphosphat zur Ausbildung einer Metallphosphatschicht auf dem Substrat verzichten zu können, wodurch das entsprechende Beschichtungsverfahren damit insgesamt sowohl ökonomischer, insbesondere weniger zeit- und kostenintensiv, als auch ökologischer als herkömmliche Verfahren gestaltet werden kann. Trotzdem wird eine hervorragende Korrosionsschutzwirkung auch auf unterschiedlichen Substraten, beispielsweise sowohl Stahl-basierten, als auch Aluminium-basierten Substraten, erzielt und die kathodische Abscheidung ist genauso wie die Härtung unter für kathodische Tauschlackierungen typischen Bedingungen optimal möglich.

Es wurde ferner gefunden, dass ein insbesondere zweistufiges Verfahren zur Beschichtung eines elektrisch leitfähigen Substrats, bei dem die erfindungsgemäße Beschichtungszusammensetzung eingesetzt wird, die oben genannten Vorteile besonders gut zur Ausprägung bringt.

### Wässrige Beschichtungszusammensetzung

Die erfindungsgemäße Beschichtungszusammensetzung ist wässrig. Der Begriff "wässrig" im Zusammenhang mit Beschichtungszusammensetzungen oder auch Dispersion ist grundsätzlich bekannt. Gemeint sind fluide Systeme, die als Lösemittel (das heißt fluides Verdünnungsmittel) einen signifikanten Anteil Wasser enthalten. Selbstverständlich können aber auch wässrigen Systeme organische Lösemittel in zumindest untergeordneten Mengen enthalten, beispielsweise als Co-Lösemittel mit Emulgatorfunktion zur Stabilisierung von bestimmten Bestandteilen wie Harzen, Pigmenten oder Additiven. Daraus folgt, dass die erfindungsgemäße wässrige Beschichtungszusammensetzung (A) vorzugsweise eine wässrige Dispersion oder Lösung, vorzugsweise eine wässrige Dispersion, ist. Weitere Details und auch bevorzugte Ausführungen zu dem Begriff "wässrig" finden sich weiter unten in der Beschreibung.

Das erfindungsgemäße wässrige Beschichtungszusammensetzung (A) enthält wenigstens ein unten genauer beschriebenes kathodisch abscheidbares Harz als Bindemittel (Komponente (A1)). Demzufolge eignet sich die Beschichtungszusammensetzung (A) zur Beschichtung elektrisch leitfähiger Substrate über das Prinzip der Elektrotauchlackierung, wobei die Zusammensetzung (A) dann kathodisch abscheidbar ist. Bevorzugt ist die Beschichtungszusammensetzung (A) also ein Elektrotauchlack.

### Komponente (A1) und Komponente (A2)

Die erfindungsgemäß eingesetzte wässrige Beschichtungszusammensetzung (A) umfasst wenigstens ein kathodisch abscheidbares Harz als Bindemittel (Komponente (A1)) und wenigstens ein Vernetzungsmittel als Komponente (A2).

Unter Harz ist im Einklang mit der grundsätzlich bekannten Definition ein Produkt zu verstehen, das organische Bestandteile, nämlich organische Reaktionsprodukte, Oligomere und/oder Polymere enthält. Harze weisen dabei eine mehr oder weniger breite Verteilung der Molmassen auf und sind in der Regel als Bindemittel in Beschichtungszusammensetzungen einsetzbar. Nach Aushärtung einer solchen auf ein Substrat applizierten Beschichtungszusammensetzung sind sie also Teil des polymeren Netzwerks einer Beschichtungsschicht. Der Begriff "Bindemittel" wird im Rahmen der vorliegenden Erfindung aus Gründen der Übersichtlichkeit in Bezug auf das kathodisch abscheidbare Harz und nicht in Bezug auf beispielsweise Additive oder Vernetzungsmittel verwendet (auch wenn solche Additive und Vernetzungsmittel in der Regel zum nicht-flüchtigen Anteil exklusive Pigmente und Füllstoffe der Beschichtungsschicht zählen und somit nach Normdefinition dem Bindemittelanteil zugehörig sind). Die Begriffe "Harz als Bindemittel" und "Bindemittel" sind im Rahmen der vorliegenden Erfindung also gleichzusetzen.

Vorzugsweise wird zur Herstellung der erfindungsgemäßen Beschichtungszusammensetzung (A) eine wässrige Dispersion oder wässrige Lösung, besonders bevorzugt wenigstens eine wässrige Dispersion, eingesetzt, die das wenigstens eine kathodisch abscheidbare Bindemittel (A1) und das wenigstens eine Vernetzungsmittel (A2) enthält. Diese wässrige Dispersion oder Lösung enthaltend (A1) und (A2) weist vorzugsweise einen nicht-flüchtigen Anteil, das heißt einen Festkörper-Anteil, in einem Bereich von 25 bis 60 Gew-%, besonders bevorzugt in einem Bereich von 27,5 bis 55 Gew-%, ganz besonders bevorzugt in einem Bereich von 30 bis 50 Gew-%, noch bevorzugter in einem Bereich von 32,5 bis 45 Gew-%, insbesondere in einem Bereich von 35 bis 42,5 Gew-%, jeweils bezogen auf das Gesamtgewicht dieser wässrigen Dispersion oder Lösung, auf.

Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt, insbesondere über eine Dauer von 30 Minuten bei 180°C gemäß dieser Norm.

Dem Fachmann sind kathodisch abscheidbare Bindemittel (A1) bekannt. Das erfindungsgemäß eingesetzte Bindemittel (A1) ist vorzugsweise ein in Wasser lösbares oder dispergierbares Bindemittel. Alle üblichen dem Fachmann bekannten kathodisch abscheidbaren Bindemittel eignen sich dabei als Bindemittel-Komponente (A1) der erfindungsgemäßen wässrigen Beschichtungszusammensetzung (A). Kathodisch abscheidbar ist ein Bindemittel dann, wenn es funktionelle Gruppen enthält, die grundsätzlich oder unter gewissen Bedingungen positive Ladungen tragen und auf diese Weise, sofern eine Spannung angelegt wird, dazu führen, dass das Bindemittel zur Kathode wandert und sich dort nach Neutralisierung abscheidet. Beispielhaft seien Bindemittel mit Aminogruppen genannt, wobei durch geeignete pH-Wert Wahl eine Protonierung und damit positive Ladung des Bindemittels realisierbar ist. Die Abscheidung erfolgt dann durch Deprotonierung und damit Neutralisierung der Aminogruppen unter Wasserstoffbildung.

Das Bindemittel (A1) weist reaktive funktionelle Gruppen auf. Diese Gruppen ermöglichen eine Vernetzungsreaktion mit dem Vernetzungsmittel. Demzufolge ist die Beschichtungszusammensetzung (A) durch das enthaltene Bindemittel (A1) und das enthaltene Vernetzungsmittel (A2) thermisch vernetzbar (das heißt härtbar). Vorzugsweise sind das Bindemittel (A1) und das enthaltene Vernetzungsmittel (A2) beim Erwärmen auf Temperaturen oberhalb Raumtemperatur, das heißt oberhalb von 18-23°C vernetzbar. Vorzugsweise sind das Bindemittel (A1) und das enthaltene Vernetzungsmittel (A2) bei Ofentemperaturen ≥ 80°C, bevorzugter ≥ 100°C, besonders bevorzugt ≥ 125°C und ganz besonders bevorzugt ≥ 150°C vernetzbar. Die Beschichtungszusammensetzung (A) ist bevorzugt bei Temperaturen von 100 bis 250°C, noch bevorzugter bei 125 bis 250°C und besonders bevorzugt bei 150 bis 250°C härtbar.

Jede übliche dem Fachmann bekannte Vernetzungschemie für Lacke kommt dabei in Betracht. Vorzugsweise weist das Bindemittel (A1) reaktive funktionelle Gruppen ausgewählt aus der Gruppe bestehend aus gegebenenfalls substituierten primären Amino-Gruppen, gegebenenfalls substituierten sekundären Amino-Gruppen, substituierten tertiären Amino-Gruppen, Hydroxyl-Gruppen, Thiol-Gruppen, Carboxyl-Gruppen, Gruppen, welche wenigstens eine C=C-Doppelbindung aufweisen, wie beispielsweise Vinyl-Gruppen oder (Meth)acrylat-Gruppen, und Epoxid-Gruppen auf, wobei die primären und sekundären Amino-Gruppen mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Besonders bevorzugt ist wenigstens ein Bindemittel (A1), welches reaktive funktionelle Gruppen ausgewählt aus der Gruppe bestehend aus gegebenenfalls substituierten primären Amino-Gruppen, gegebenenfalls substituierten sekundären Amino-Gruppen, und Hydroxyl-Gruppen aufweist, wobei die primären und sekundären Amino-Gruppen gegebenenfalls mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Die reaktiven funktionellen Gruppen, insbesondere die gegebenenfalls substituierten primären und sekundären Amino-Gruppen, können dabei gegebenenfalls zumindest teilweise in protonierter Form vorliegen.

Besonders bevorzugt weist das Bindemittel (A1) tertiäre gegebenenfalls zumindest teilweise in protonierter Form vorliegende Amino-Gruppen auf, ganz besonders bevorzugt solche tertiären Amino-Gruppen, die jeweils unabhängig voneinander wenigstens zwei jeweils wenigstens einfach mit einer Hydroxyl-Gruppe substituierte C₁₋₃-Alkyl-Gruppen aufweisen, insbesondere die jeweils unabhängig voneinander zwei Hydroxyethyl-Gruppen, zwei Hydroxypropyl-Gruppen oder eine Hydroxylpropyl- und eine Hydroxyethyl-Gruppe aufweisen, wobei das Bindemittel (A1) vorzugsweise wenigstens ein polymeres Harz ist. Derartige Bindemittel können beispielsweise nach einem Verfahren erhalten werden, welches in JP 2011-057944 A beschrieben ist.

Vorzugsweise ist das in der Beschichtungszusammensetzung (A) enthaltene Bindemittel (A1) wenigstens ein Acrylat-basiertes polymeres Harz und/oder wenigstens ein Epoxid-basiertes polymeres Harz, insbesondere wenigstens ein kationisches Epoxid-basiertes und Amin-modifiziertes Harz. Die Herstellung solcher kationischer Amin-modifizierter Epoxid-basierter Harze ist bekannt und wird beispielsweise in DE 35 18 732, DE 35 18 770, EP 0 004 090, EP 0 012 463, EP 0 961 797 B1 und EP 0 505 445 B1 beschrieben. Unter kationischen Epoxid-basierten Amin-modifizierten Harzen werden vorzugsweise Reaktionsprodukte aus wenigstens einem gegebenenfalls modifizierten Polyepoxid, das heißt wenigstens einer gegebenenfalls modifizierten Verbindung mit zwei oder mehr Epoxid-Gruppen, und wenigstens einem vorzugsweise wasserlöslichen Amin, vorzugsweise wenigstens einem solchen primären und/oder sekundären Amin verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-3-Propylenglykol, 1,5-Pentandiol, 1,2,6-Hexantriol, Glycerin und Bis-(4-hydroxycyclohexyl)2,2propan. Unter modifizierten Polyepoxiden werden solche Polyepoxide verstanden, in denen ein Teil der reaktiven funktionellen Gruppen mit wenigstens einer modifizierenden Verbindung umgesetzt worden ist. Beispiele für solche modifizierenden Verbindungen sind:
a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z. B. N,N'-Dialkylalykendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Neopentylglykol, Bis-ethoxiliertes Neopentylglykol, Hydroxipivalinsäureneopentylglykolester, Dimethylhydantoin-N-N'diethanol, Hexandiol-1,6, Hexandiol-2,5, 1,4-Bis- (hydroximethyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.

Beispiele für einsetzbare Amine sind Mono- und Dialkylamine, wie Methylamin, Ethylamin, Propylamin, Butylamin, Dimethylamin, Diethylamin, Dipropylamin, Methylbutylamin, Alkanolamine, wie z. B. Methylethanolamin oder Diethanolamin, Dialkylaminoalkylamine, wie z. B. Dimethylaminoethylamin, Diethylaminopropylamin, oder Dimethylaminopropylamin. Die einsetzbaren Amine können auch noch andere funktionelle Gruppen enthalten, sofern diese die Umsetzung des Amins mit der Epoxidgruppe des gegebenenfalls modifizierten Polyepoxids nicht stören und auch nicht zu einer Gelierung der Reaktionsmischung führen. Bevorzugt werden sekundäre Amine eingesetzt. Die für die Wasserverdünnbarkeit und elektrische Abscheidung erforderlichen Ladungen können durch Protonierung mit wasserlöslichen Säuren (z.B. Borsäure, Ameisensäure, Essigsäure, Milchsäure, bevorzugt Essigsäure) erzeugt werden. Eine weitere Möglichkeit zur Einführung kationischer Gruppen in das gegebenenfalls modifizierte Polyepoxid besteht in der Umsetzung von Epoxidgruppen des Polyepoxids mit Amin-Salzen.

Die Beschichtungszusammensetzung (A) umfasst neben dem wenigstens einen kathodisch abscheidbaren Bindemittel (A1) wenigstens ein Vernetzungsmittel (A2), welches eine Vernetzungsreaktion mit den reaktiven funktionellen Gruppen des Bindemittels (A1) ermöglicht.

Alle dem Fachmann bekannten üblichen Vernetzungsmittel (A2) können eingesetzt werden wie beispielsweise Phenoplaste, polyfunktionelle Mannich-Basen, Melaminharze, Benzoguanamin-Harze, Epoxide, freie Polyisocyanate und/oder blockierte Polyisocyanate, insbesondere blockierte Polyisocyanate.

Ein besonders bevorzugtes Vernetzungsmittel (A2) ist ein blockiertes Polyisocyanat. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, das heißt bei einer Temperatur von 18 bis 23°C beständig ist, bei erhöhten Temperaturen, beispielsweise aber bei ≥ 80°C, bevorzugter ≥ 100°C, besonders bevorzugt ≥ 125°C und ganz besonders bevorzugt ≥ 150°C oder bei 80°C bis 300°C oder bei 100 bis 250°C, noch bevorzugter bei 125 bis 250°C und besonders bevorzugt bei 150 bis 250°C, reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel (A2) in Betracht kommenden organischen Polyisocyanate können auch Präpolymere sein, die sich beispielsweise von einem Polyol einschliesslich eines Polyetherpolyols oder eines Polyesterpolyols ableiten. Ganz besonders bevorzugt sind 2,4-Toluoldiisocyanat und/oder 2,6-Toluoldiisocyanat (TDI), beziehungsweise Isomerengemische aus 2,4-Toluoldiisocyanat und 2,6-Toluoldiisocyanat und/oder Diphenylmethandiisocyanat (MDI).

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Vorzugsweise liegt das relative Gewichtsverhältnis des wenigstens einen Bindemittels (A1) und des wenigstens einen Vernetzungsmittels (A2) in der erfindungsgemäß eingesetzten Beschichtungszusammensetzung (A) zueinander in einem Bereich von 4:1 bis 1,1:1, besonders bevorzugt in einem Bereich von 3:1 bis 1,1:1, ganz besonders bevorzugt in einem Bereich von 2,5:1 bis 1,1:1, insbesondere in einem Bereich von 2,1:1 bis 1,1:1, jeweils bezogen auf den Festkörper-Anteil des wenigstens einen Bindemittels (A1) und des wenigstens einen Vernetzungsmittel (A2) in der Beschichtungszusammensetzung (A).

In einer anderen bevorzugten Ausführungsform liegt das relative Gewichtsverhältnis des wenigstens einen Bindemittels (A1) und des wenigstens einen Vernetzungsmittels (A2) in der erfindungsgemäß eingesetzten Beschichtungszusammensetzung (A) zueinander in einem Bereich von 4:1 bis 1,5:1, besonders bevorzugt in einem Bereich von 3:1 bis 1,5:1, ganz besonders bevorzugt in einem Bereich von 2,5:1 bis 1,5:1, insbesondere in einem Bereich von 2,1:1 bis 1,5:1, jeweils bezogen auf den Festkörper-Anteil des wenigstens einen Bindemittels (A1) und des wenigstens einen Vernetzungsmittel (A2) in der Beschichtungszusammensetzung (A).

Wie bereits oben angegeben, ist die erfindungsgemäße Beschichtungszusammensetzung wässrig. Unter dem Begriff "wässrig" im Zusammenhang mit der Beschichtungszusammensetzung (A) werden vorzugsweise solche flüssigen Beschichtungszusammensetzungen (A) verstanden, die - als flüssiges Verdünnungsmittel, das heißt als flüssiges Lösemittel und/oder Dispergiermittel - Wasser als Hauptkomponente enthalten. Die Beschichtungszusammensetzung (A) kann jedoch selbstverständlich wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, insbesondere Methanol und/oder Ethanol, Ether, Ester, Ketone und Amide, wie zum Beispiel N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt. Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in Beschichtungszusammensetzung (A) enthaltenen flüssigen Verdünnungsmitteln, das heißt flüssigen Lösemitteln und/oder Dispergiermitteln.

Vorzugsweise weist die wässrige Beschichtungszusammensetzung (A) einen Festkörper-Anteil im Bereich von 5 bis 45 Gew.-%, besonders bevorzugt im Bereich von 7,5 bis 35 Gew.-%, ganz besonders bevorzugt von 10 bis 30 Gew.-%, noch bevorzugter im Bereich von 12,5 bis 25 Gew.-% oder im Bereich von 15 bis 30 Gew.-% oder im Bereich von 15 bis 25 Gew-%, insbesondere von 17 bis 22 Gew.-%, jeweils bezogen auf das Gesamtgewicht der wässrigen Beschichtungszusammensetzung (A) auf. Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt.

Die erfindungsgemäße Beschichtungszusammensetzung (A) weist bevorzugt einen pH-Wert in einem Bereich von 4,0 bis 6,5 auf. Vorzugsweise weist die erfindungsgemäß eingesetzte Beschichtungszusammensetzung (A) einen pH-Wert im Bereich von 4,2 bis 6,5, insbesondere im Bereich von 4,4 bis 6,5 oder im Bereich von 4,6 bis 6,5, insbesondere bevorzugt im Bereich von 4,8 bis 6,4, am meisten bevorzugt im Bereich von 5,0 bis 6,2 oder 5,2 bis 6,0 oder 5,5 bis 6,0 auf. Methoden zur Einstellung von pH-Werten in wässrigen Zusammensetzungen sind dem Fachmann bekannt. Vorzugsweise erfolgt die Einstellung des erwünschten pH-Werts durch Zugabe wenigstens einer Säure, besonders bevorzugt wenigstens einer anorganischen und/oder wenigstens einer organischen Säure. Geeignete anorganische Säuren sind beispielsweise Salzsäure, Schwefelsäure, Phosphorsäure und/oder Salpetersäure. Eine geeignete organische Säure ist beispielsweise Propionsäure, Milchsäure, Essigsäure und/oder Ameisensäure. Alternativ oder zusätzlich und zudem vorzugsweise kann auch die wenigstens eine in der Beschichtungszusammensetzung (A) vorhandene Komponente (A3aa) zur Einstellung des pH-Werts eingesetzt werden, sofern diese dazu geeignet ist, das heißt beispielsweise wenigstens eine deprotonierbare funktionelle Gruppe wie beispielsweise eine Carboxyl-Gruppe und/oder eine phenolische OH-Gruppe aufweist.

### Komponente (A3)

Die Beschichtungszusammensetzung (A) enthält eine Gesamtmenge von (A3) wenigstens 100 ppm Bismut, bezogen auf das Gesamtgewicht der Beschichtungszusammensetzung (A).

Unter dem Begriff "Bismut", insbesondere im Zusammenhang mit der Gesamtmenge an Bismut in der Beschichtungszusammensetzung (A) und der Komponente (A3), werden im Sinne der vorliegenden Erfindung vorzugsweise kationische Bismut-Atome unterschiedlicher Wertigkeiten verstanden. Das Bismut kann dabei in trivalenter Form (Bi(III)) vorliegen, kann aber alternativ oder zusätzlich auch in anderen Oxidationsstufen vorliegen. Die Menge an Bismut wird jeweils als Bismut-Metall berechnet.

Vorzugsweise beträgt die Gesamtmenge des in der Beschichtungszusammensetzung (A) enthaltenen Bismuts wenigstens 130 ppm oder wenigstens 150 ppm oder wenigstens 200 ppm, besonders bevorzugt wenigstens 300 ppm, ganz besonders bevorzugt wenigstens 500 oder wenigstens 750 ppm, insbesondere wenigstens 1 000 ppm oder wenigstens 1 500 ppm oder wenigstens 2000 ppm, jeweils bezogen auf das Gesamtgewicht der Beschichtungszusammensetzung (A). Dabei beträgt die Gesamtmenge des in der Beschichtungszusammensetzung (A) enthaltenen Bismuts vorzugsweise jeweils höchstens 20 000 ppm, besonders bevorzugt höchstens 15 000 ppm, ganz besonders bevorzugt höchstens 10 000 ppm oder höchstens 7 500 ppm, insbesondere höchstens 5 000 ppm oder höchstens 4 000 ppm, jeweils bezogen auf das Gesamtgewicht der Beschichtungszusammensetzung (A). Vorzugsweise liegt die Gesamtmenge des in der Beschichtungszusammensetzung (A) enthaltenen Bismuts, bezogen auf das Gesamtgewicht der wässrigen Beschichtungszusammensetzung (A) in einem Bereich von 130 ppm bis 20 000 ppm, besonders bevorzugt in einem Bereich von 150 ppm bis 15 000 ppm, ganz besonders bevorzugt in einem Bereich von 200 ppm bis 10 000 ppm, insbesondere bevorzugt in einem Bereich von 500 ppm bis 10 000 ppm oder in einem Bereich von 500 bis 20 000 ppm oder in einem Bereich von 1 000 ppm bis 10 000 ppm oder in einem Bereich von 1 000 ppm bis 5 000 ppm oder in einem Bereich von 500 ppm bis 3 000 ppm. Die Menge an Bismut, berechnet als Metall, kann mittels der in den Ausführungsbeispielen beschriebenen Methode (ICP-OES) bestimmt werden. Dies ist selbstverständlich nicht notwendig, wenn die Mengen der eingesetzten Bismuthaltigen Bestandteile unmittelbar bekannt sind und eine rechnerische Ermittlung möglich ist.

**In** einer besonderen Ausführungsform der vorliegenden Erfindung enthält die Beschichtungszusammensetzung (A) mindestens 130 ppm Bismut, bezogen auf das Gesamtgewicht der Beschichtungszusammensetzung (A), wobei davon
(A3a) wenigstens 30 ppm Bismut, bezogen auf das Gesamtgewicht der Beschichtungszusammensetzung (A), in einer in der Beschichtungszusammensetzung (A) gelöst vorliegenden Form vorhanden sind, und
(A3b) wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind.

Unter dem Begriff "in gelöst vorliegender Form" im Zusammenhang mit der Komponente (A3a) der erfindungsgemäßen Beschichtungszusammensetzung (A) wird vorzugsweise verstanden, dass die Komponente (A3a) bei einer Temperatur der Beschichtungszusammensetzung (A) von 20°C in gelöst vorliegender Form in der Beschichtungszusammensetzung (A) vorliegt. Die Komponente (A3a) ist somit, bevor sie in die Beschichtungszusammensetzung (A) eingebracht wird, bevorzugt Teil einer zumindest begrenzt wasserlöslichen Verbindung, insbesondere eines zumindest begrenzt wasserlöslichen Bismutsalzes. Dies erklärt sich für den Fachmann bereits daraus, dass die erfindungsgemäße Beschichtungszusammensetzung wässrig ist. Durch Einbringen eines zumindest begrenzt wasserlöslichen Bismutsalzes in die Beschichtungszusammensetzung (A) wird dann zumindest ein Teil des Bismutsalzes gelöst, sodass die Zusammensetzung dann die Komponente (A3a) enthält.

Das Einbringen der Komponente (A3a) wird bevorzugt unter zusätzlichem Einsatz eines zur Komplexierung von Bismut geeigneten wenigstens zweizähnigen Komplexierungsmittels (A3aa) realisiert. Ein solches Komplexierungsmittel wird in der Regel zu einem höheren Anteil an gelöstem Bismut führen, als dies durch die Wasserlöslichkeit der jeweils eingesetzten Bismutverbindung vorgegeben ist. Vorzugsweise liegen die Komponenten (A3a) und (A3aa) also in Form eines Komplexes in der Beschichtungszusammensetzung (A) vor. Die wenigstens 30 ppm Bismut, welche in einer in der Beschichtungszusammensetzung (A) als Komponente (A3a) gelösten Form vorliegen, liegen daher vorzugsweise gemeinsam mit der Komponente (A3aa) in Form einer in der Beschichtungszusammensetzung (A) gelösten Bismut-Verbindung vor, insbesondere in Form wenigstens eines Komplexes aus den Komponenten (A3a) und (A3aa). Alternativ und/oder zusätzlich kann die Komponente (A3a) beispielsweise auch in Form von hydratisiertem Bismut vorliegen. Vorzugsweise liegt als Komponente (A3a) zumindest teilweise trivalentes Bismut vor.

Vorzugsweise ist die Komponente (A3a) erhältlich aus wenigstens einer Bismut-Verbindung ausgewählt aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon. Dabei wird wenigstens eine solche Bismut-Verbindung vorzugsweise in Wasser in Gegenwart wenigstens eines Komplexierungsmittels (A3aa) teilweise unter Erhalt der Komponente (A3a) umgesetzt.

Vorzugsweise enthält die Beschichtungszusammensetzung (A) wenigstens 50 ppm, besonders bevorzugt wenigstens 75 ppm, ganz besonders bevorzugt wenigstens 100 ppm oder wenigstens 200 ppm, insbesondere wenigstens 250 ppm Bismut, jeweils bezogen auf das Gesamtgewicht der Beschichtungszusammensetzung (A), in einer in der Beschichtungszusammensetzung (A) gelöst vorliegenden Form als Komponente (A3a). Dem Fachmann ist klar, - da die Beschichtungszusammensetzung (A) in der hier diskutierten Ausführungsform wenigstens 100 ppm Bismut, bezogen auf das Gesamtgewicht der Beschichtungszusammensetzung (A), in einer in der Beschichtungszusammensetzung (A) ungelöst vorliegenden Form (A3b) enthält -, dass die Beschichtungszusammensetzung (A) dadurch eine Gesamtmenge von wenigstens 150 ppm beziehungsweise 175 ppm beziehungsweise 200 ppm beziehungsweise 300 ppm beziehungsweise 350 ppm Bismut, jeweils bezogen auf das Gesamtgewicht der Beschichtungszusammensetzung (A), enthält. Die Menge an als Komponente (A3a) gelöst vorliegendem Bismut wird jeweils als Bismut-Metall berechnet. Der Anteil beziehungsweise die Menge an Bismut (A3a) kann wiederum über die ICP-OES- Methode (siehe Beispielteil) erhalten werden.

Die in der hier diskutierten Ausführungsform enthaltenen wenigstens 100 ppm Bismut, welche in einer in der Beschichtungszusammensetzung (A) als Komponente (A3b) ungelösten Form vorliegen, liegen vorzugsweise in Form einer in der Beschichtungszusammensetzung (A) ungelösten Bismut-Verbindung vor, insbesondere in Form wenigstens eines ungelösten Bismut-Salzes, Hydroxids und/oder Oxids.

Vorzugsweise beträgt der Anteil der Komponente (A3b) innerhalb der Gesamtmenge des in der Beschichtungszusammensetzung (A) enthaltenen Bismuts, das heißt bezogen auf die Gesamtmenge des in der Beschichtungszusammensetzung (A) enthaltenen Bismuts in Mol, wenigstens 10 mol-%, besonders bevorzugt wenigstens 20 mol-% oder wenigstens 30 mol-%, ganz besonders bevorzugt wenigstens 40 mol-% oder wenigstens 50 mol-% oder wenigstens 60 mol-% oder wenigstens 70 mol-%. Dabei beträgt der Anteil der Komponente (A3b) innerhalb der Gesamtmenge des in der Beschichtungszusammensetzung (A) enthaltenen Bismuts vorzugsweise jeweils höchstens 98 mol-%, besonders bevorzugt höchstens 97 mol-% oder höchstens 96 mol-%, ganz besonders bevorzugt höchstens 95 mol-%.

Vorzugsweise ist der Anteil der Komponente (A3b) in mol-% innerhalb der Gesamtmenge des in der Beschichtungszusammensetzung (A) enthaltenen Bismuts größer als der Anteil der Komponente (A3a) in mol-%.

Unter dem Begriff "in ungelöst vorliegender Form" im Zusammenhang mit der Komponente (A3b) der erfindungsgemäßen Beschichtungszusammensetzung (A) wird vorzugsweise verstanden, dass die Komponente (A3b) bei einer Temperatur der Beschichtungszusammensetzung (A) von 20 °C in ungelöst vorliegender Form in der Beschichtungszusammensetzung (A) vorliegt. Die Komponente (A3b) ist somit, bevor sie in die Beschichtungszusammensetzung (A) eingebracht wird, bevorzugt Teil einer zumindest nicht unbegrenzt wasserlöslichen Verbindung, insbesondere eines zumindest nicht unbegrenzt wasserlöslichen Bismutsalzes.

Vorzugsweise liegt die Komponente (A3b) in Form einer Bismut-Verbindung ausgewählt aus der Gruppe bestehend aus Oxiden, basischen Oxiden, Hydroxiden, Carbonaten, basischen Nitraten (Subnitraten), Salicylaten und basischen Salicylaten (Subsalicylaten) des Bismuts sowie Mischungen davon, besonders bevorzugt in Form von Bismut-Subnitrat, vor.

Vorzugsweise enthält die Beschichtungszusammensetzung (A) wenigstens 150 ppm, besonders bevorzugt wenigstens 200 ppm, ganz besonders bevorzugt wenigstens 250 ppm oder wenigstens 300 ppm, insbesondere wenigstens 500 ppm Bismut, jeweils bezogen auf das Gesamtgewicht der Beschichtungszusammensetzung (A), in einer in der Beschichtungszusammensetzung (A) ungelöst vorliegenden Form als Komponente (A3b). Dem Fachmann ist klar - da die Beschichtungszusammensetzung (A) in dieser Ausführungsform wenigstens 30 ppm Bismut, bezogen auf das Gesamtgewicht der Beschichtungszusammensetzung (A), in einer in der Beschichtungs-zusammensetzung (A) gelöst vorliegenden Form (A3a) enthält -, dass die Beschichtungszusammensetzung (A) dadurch eine Gesamtmenge von wenigstens 180 ppm beziehungsweise wenigstens 230 ppm beziehungsweise wenigstens 280 ppm beziehungsweise wenigstens 330 ppm beziehungsweise wenigstens 530 ppm Bismut, jeweils bezogen auf das Gesamtgewicht der Beschichtungszusammensetzung (A), enthält. Die Menge an als Komponente (A3b) ungelöst vorliegendem Bismut wird jeweils als Bismut-Metall berechnet. Der Anteil der Komponente (A3b) in der Beschichtungszusammensetzung (A) kann wiederum unter Einbindung der ICP-OES- Methode errechnet werden (siehe Beispielteil).

Aus Obigem folgt, dass die Einbringung der Komponenten (A3a) und (A3b), gegebenenfalls unter Einsatz einer Komponente (A3aa), auch aus ein und derselben Bismutverbindung erfolgen kann. Durch Anpassung der Mengenverhältnisse von Komponente (A3aa) und der Bismutverbindung und/oder geeignete Wahl einer bestimmten Menge einer Bismutverbindung mit einer bestimmten begrenzten Wasserlöslichkeit können dann die zu erzielenden Mengen an (A3a) und (A3b) erhalten werden. In diesem Zusammenhang von Vorteil ist zudem, dass die Bismutverbindung und gegebenenfalls die Komponente (A3aa) auch direkt und ohne separaten Mischungsschritt der Beschichtungszusammensetzung zugegeben werden können und auf diese Weise die Komponenten (A3a) und (A3b) auf sehr effiziente Weise in die Zusammensetzung eingebracht werden können. Dieses Vorgehen, das heißt die direkte Zugabe einer solchen Bismutverbindung, das heißt insbesondere eine nicht vollständig oder nur schwer wasserlösliche Bismutverbindung, sowie der Komponente (A3aa) zur Beschichtungszusammensetzung ist demnach bevorzugt.

Vorzugsweise enthält die Beschichtungszusammensetzung (A) eine Gesamtmenge von wenigstens 300 ppm Bismut, bezogen auf das Gesamtgewicht der Beschichtungszusammensetzung (A), wobei davon
(A3a) wenigstens 100 ppm Bismut, bezogen auf das Gesamtgewicht der Beschichtungszusammensetzung (A), in einer in der Beschichtungszusammensetzung (A) gelöst vorliegenden Form und
(A3b) wenigstens 200 ppm Bismut, bezogen auf das Gesamtgewicht der Beschichtungszusammensetzung (A), in einer in der Beschichtungszusammensetzung (A) ungelöst vorliegenden Form vorhanden sind.

Besonders bevorzugt enthält die Beschichtungszusammensetzung (A) eine Gesamtmenge von wenigstens 400 ppm Bismut, bezogen auf das Gesamtgewicht der Beschichtungszusammensetzung (A), wobei davon
(A3a) wenigstens 150 ppm Bismut, bezogen auf das Gesamtgewicht der Beschichtungszusammensetzung (A), in einer in der Beschichtungszusammensetzung (A) gelöst vorliegenden Form und
(A3b) wenigstens 250 ppm Bismut, bezogen auf das Gesamtgewicht der Beschichtungszusammensetzung (A), in einer in der Beschichtungszusammensetzung (A) ungelöst vorliegenden Form vorhanden sind.

Ganz besonders bevorzugt enthält die Beschichtungszusammensetzung (A) eine Gesamtmenge von wenigstens 500 ppm Bismut, bezogen auf das Gesamtgewicht der Beschichtungszusammensetzung (A), wobei davon
(A3a) wenigstens 200 ppm Bismut, bezogen auf das Gesamtgewicht der Beschichtungszusammensetzung (A), in einer in der Beschichtungszusammensetzung (A) gelöst vorliegenden Form und
(A3b) wenigstens 300 ppm Bismut, bezogen auf das Gesamtgewicht der Beschichtungszusammensetzung (A), in einer in der Beschichtungszusammensetzung (A) ungelöst vorliegenden Form vorhanden sind.

### Komponente (A3aa)

Die erfindungsgemäße Beschichtungszusammensetzung (A) enthält bevorzugt wenigstens ein zur Komplexierung von Bismut geeignetes wenigstens zweizähniges Komplexierungsmittel als Komponente (A3aa), wobei das wenigstens eine Komplexierungsmittel (A3aa) in der wässrigen Beschichtungszusammensetzung (A) bevorzugt in einem Anteil von wenigstens 5 mol-%, bezogen auf die Gesamtmenge des in der Beschichtungszusammensetzung (A) enthaltenen Bismuts, vorhanden ist. Wie bereits oben beschrieben, kann durch die Gegenwart der Komponente (A3aa) in der Beschichtungszusammensetzung (A) eine an sich ungelöste Bismutverbindung (enthaltend Komponente (A3b)) teilweise in die Komponente (A3a) überführt werden.

Als Komponente (A3aa) sind insbesondere solche Komplexierungsmittel geeignet, welche in der Lage sind, in Wasser ungelöste Bismutverbindungen, vorzugsweise bei Temperaturen im Bereich von 10 bis 90 °C oder im Bereich von 20 bis 80 °C, besonders bevorzugt im Bereich von 30 bis 75 °C, in eine wasserlösliche Form (A3a) zu überführen.

Ob eine bestimmte Komponente oder chemische Verbindung als erfindungsgemäß eingesetztes wenigstens zweizähniges Komplexierungsmittel (A3aa) geeignet ist, ist für den Fachmann durch folgende Bestimmungsmethode zu überprüfen: Die Gesamtmenge der in einer Beschichtungszusammensetzung, die jedoch kein Komplexierungsmittel enthält, enthaltenen Komponenten (A3a) und (A3b) beziehungsweise deren Anteile wird bestimmt. Zu dieser Zusammensetzung wird eine solche Menge der chemischen Verbindung, deren Komplexierungseignung untersucht werden soll, gegeben, dass das Molverhältnis dieser Verbindung zur Komponente (A3b) in der Zusammensetzung genau eins beträgt. Die resultierende Mischung wird bei 18 bis 23°C für eine Dauer von 24 Stunden gerührt und dann die Menge an in der Zusammensetzung enthaltener Komponente (A3a) bestimmt. Wenn sich der Gehalt an Komponente (A3a) um wenigstens 50%, vorzugsweise um wenigstens 100%, bezogen auf den vor Zugabe der Komponente oder Verbindung ermittelten Gehalt an (A3a) erhöht hat, so ist die Komponente oder Verbindung als Komplexierungsmittel (A3aa) geeignet.

Vorzugsweise ist das wenigstens eine Komplexierungsmittel (A3aa) in der wässrigen Beschichtungszusammensetzung (A) in einem Anteil von wenigstens 7,5 mol-% oder wenigstens 10 mol-%, besonders bevorzugt in einem Anteil von wenigstens 15 mol-% oder wenigstens 20 mol-%, ganz besonders bevorzugt in einem Anteil von wenigstens 30 mol-% oder wenigstens 40 mol-%, insbesondere in einem Anteil von wenigstens 50 mol-%, jeweils bezogen auf die Gesamtmenge des in der Beschichtungszusammensetzung (A) enthaltenen Bismuts, vorhanden. Die jeweilige Menge des erfindungsgemäß eingesetzten Komplexierungsmittel (A3aa) ist dabei beispielsweise abhängig von der Zähnigkeit von (A3aa) und/oder der Komplexierungsstärke von (A3aa) und/oder der gewünschten Anteilsmenge der Komponenten (A3a) und/oder (A3b). Das wenigstens eine Komplexierungsmittel (A3aa) ist in der wässrigen Beschichtungszusammensetzung (A) aber nur in einem solchen Anteil vorhanden, dass gewährleistet ist, dass wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind.

Das Komplexierungsmittel (A3aa) ist vorzugsweise keine Bindemittel-Komponente (A1) und wird insbesondere auch nicht zur Herstellung des Bindemittels (A1) eingesetzt.

Das Komplexierungsmittel (A3aa) ist wenigstens zweizähnig. Einem Fachmann ist der Begriff der "Zähnigkeit" bekannt. Darunter wird die Anzahl möglicher Bindungen verstanden, die von einem Molekül des Komplexierungsmittels (A3aa) an das zu komplexierende Atom wie an das zu komplexierende Bismut-Atom und/oder Bismut-Ion ausgebildet werden können. Bevorzugt ist (A3aa) zweizähnig, dreizähnig oder vierzähnig, insbesondere zweizähnig.

Das Komplexierungsmittel (A3aa) kann als Anion, beispielsweise als Anion einer organischen Mono- oder Polycarbonsäure vorliegen.

Vorzugsweise weist das Komplexierungsmittel (A3aa) wenigstens zwei Donoratome auf, das heißt wenigstens zwei Atome mit mindestens einem freien Elektronenpaar in der Valenzschale. Bevorzugte Donoratome sind ausgewählt aus der Gruppe bestehend aus N-, S- und O-Atomen, sowie Mischungen davon. Besonders bevorzugt sind Komplexierungsmittel (A3aa), die wenigstens ein Sauerstoff-Donoratom und wenigstens ein Stickstoff-Donoratom aufweisen oder die wenigstens zwei Sauerstoff-Donoratome aufweisen. Ganz besonders bevorzugt sind Komplexierungsmittel (A3aa), die wenigstens zwei Sauerstoff-Donoratome aufweisen.

Sind O- und/oder S-Donoratome im Komplexierungsmittel (A3aa) vorhanden, so ist vorzugsweise jedes dieser wenigstens zwei Donoratome an ein anderes Trägeratom wie ein Kohlenstoffatom gebunden, welches selbst kein Donoratom darstellt. Sind wenigstens zwei N-Donoratome im Komplexierungsmittel (A3aa) vorhanden, so kann jedes dieser wenigstens zwei N-Donoratome an das gleiche Trägeratom gebunden werden, welches selbst kein Donoratom darstellt, wie beispielsweise im Fall von Guanidin oder Harnstoff.

Sind O- und/oder S-Donoratome im Komplexierungsmittel (A3aa) wie beispielsweise wenigstens zwei O-Donoratome vorhanden und ist jedes dieser wenigstens zwei Donoratome an ein anderes Trägeratom wie an ein Kohlenstoffatom gebunden, welches selbst kein Donoratom darstellt, so können diese wenigstens zwei Trägeratome direkt aneinander gebunden, das heißt benachbart sein, wie es beispielsweise bei Oxalsäure, Milchsäure, Bicin (N,N'-Bis((2-Hydroxyethyl)glycin), EDTA oder α-Aminosäuren der Fall ist. Zwei Donoratome, die zwei aneinander gebundenen Trägeratome und das zu komplexierende Atom und/oder Ion können dann einen Fünfring ausbilden. Die beiden Trägeratome können alternativ auch über ein einziges weiteres Atom miteinander verbrückt sein, wie es beispielsweise bei Acetylacetonat oder hinsichtlich der Phosphoratome als Trägeratome bei 1-Hydroxyethan-1,1-diphosphonsäure der Fall ist. Zwei Donoratome, die zwei Trägeratome, das diese Trägeratome verbrückende Atom und das zu komplexierende Atom und/oder Ion können dann einen Sechsring ausbilden. Die mindestens zwei Trägeratome können ferner durch zwei weitere Atome miteinander verbunden sein, wie es beispielsweise bei Maleinsäure der Fall ist. Liegt zwischen den beiden Atomen, die die Trägeratome miteinander verbinden, eine Doppelbindung vor, so müssen die beiden Trägeratome in cis-Stellung zueinander stehen, um eine Siebenringbildung mit dem zu komplexierenden Atom und/oder Ion zu ermöglichen. Sind zwei Trägeratome Teil eines aromatischen Systems oder sind diese Trägeratome durch bis zu zwei weitere Trägeratome miteinander verbunden, so sind Stellungen im aromatischen System in 1,2- und 1,3-Position bevorzugt, wie beispielsweise im Fall der Gallussäure, des Tirons, der Salicylsäure oder der Phthalsäure. Weiterhin können die Donoratome auch selbst Teil eines aliphatischen oder aromatischen Ringsystems sein, wie beispielsweise im Fall des 8-Hydroxychinolins.

Ganz besonders bevorzugt sind Komplexierungsmittel (A3aa), die wenigstens zwei Sauerstoff-Donoratome aufweisen. In diesem Fall kann wenigstens eines der Sauerstoff-Donoratome eine negative Ladung aufweisen, wie beispielsweise im Fall von Acetylacetonat, oder Teil einer Säure-Gruppe sein wie beispielsweise einer Carbonsäure-Gruppe, Phosphonsäure-Gruppe oder Sulfonsäure-Gruppe. Gegebenenfalls kann auch oder alternativ das Sauerstoffatom der Säure-Gruppe eine negative Ladung tragen wie bei Deprotonierung und Ausbildung einer Carboxylat-Gruppe, Phosphonat oder Sulfonat-Gruppe. Die Formulierung "Komplexierungsmittel (A3aa), die wenigstens zwei Sauerstoff-Donoratome aufweisen" schließt natürlich nicht aus, dass zudem auch noch andere Donoratome wie beispielsweise Stickstoff vorhanden sind.

Ist wenigstens ein Donoratom ein N-Atom, so ist ein weiteres Donoratom vorzugsweise ein O-Atom, das eine negative Ladung trägt, oder Teil einer Säuregruppe (Carbonsäure, Phosphonsäure, Sulfonsäure etc.) ist.

Weist (A3aa) nur N-Atome als Donoratome auf, so kann auch diese Komponente als Anion vorliegen wie beispielsweise im Fall von 1,2- oder 1,3- Dioxim-Anionen. Bevorzugte Trägeratome in diesem Fall sind C-Atome. N-Atome als Donoratome liegen vorzugsweise in Form von primären, sekundären oder tertiären Aminogruppen oder als Oximgruppen vor.

Weist (A3aa) nur S-Atome und/oder O-Atome als Donoratome auf, so sind bevorzugte Trägeratome in diesem Fall C-Atome, S-Atome und P-Atome, insbesondere C-Atome. O-Atome als Donoratome liegen vorzugsweise zumindest anteilig in anionischer Form (z.B. Acetylacetonat) oder in Form von CarboxylatGruppen, Phosphonatgruppen oder Sulfonatgruppen vor. S-Atome als Donoratome liegen bevorzugt in der Form von Thiolen, wie beispielsweise im Cystein, vor.

Vorzugsweise ist das Komplexierungsmittel (A3aa) ausgewählt aus der Gruppe bestehend aus stickstofffreien vorzugsweise wenigstens einfach Hydroxyl-substituierten organischen Monocarbonsäuren, stickstofffreien gegebenenfalls wenigstens einfach Hydroxyl-substituierten organischen Polycarbonsäuren, gegebenenfalls wenigstens einfach Hydroxyl-substituierten Aminopolycarbonsäuren, gegebenenfalls wenigstens einfach Hydroxyl-substituierten Aminomonocarbonsäuren, und Sulfonsäuren, sowie jeweils deren Anionen, und zudem vorzugsweise gegebenenfalls wenigstens einfach Hydroxyl-substituierten Monoaminen und gegebenenfalls wenigstens einfach Hydroxyl-substituierten Polyaminen, und chemischen Verbindungen, die wenigstens zwei-O-Donoratome enthalten und nicht unter die innerhalb dieser Aufzählung genannten Verbindungen fallen, wie beispielsweise 8-Hydroxychinolin und Acetylaceton.

Als Komplexierungsmittel (A3aa) eignet sich beispielsweise wenigstens eine organische Mono- oder Polycarbonsäure, welche vorzugsweise kein(e) Stickstoffatom(e) aufweist, und/oder deren Anionen.

Unter dem Begriff "Polycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist. Besonders bevorzugt weist die Polycarbonsäure 2 oder 3 Carboxyl-Gruppen auf. Bei Polycarbonsäuren mit zwei Carboxyl-Gruppen handelt es sich um Dicarbonsäuren und bei Polycarbonsäuren mit drei Carboxyl-Gruppen handelt es sich um Tricarbonsäuren. Die erfindungsgemäß eingesetzten Polycarbonsäuren können aromatisch, teilaromatisch, cycloaliphatisch, teilcycloaliphatisch oder aliphatisch sein, vorzugsweise aliphatisch sein. Vorzugsweise weisen die erfindungsgemäß eingesetzten Polycarbonsäuren 2 bis 64 Kohlenstoffatome, besonders bevorzugt 2 bis 36, insbesondere 3 bis 18 oder 3 bis 8 Kohlenstoffatome auf. Beispiele für Polycarbonsäuren sind Oxalsäure, Malonsäure, Bernsteinsäure, Glutarsäure, Adipinsäure, Weinsäure, Citronensäure, Schleimsäure und Äpfelsäure.

Unter dem Begriff "Monocarbonsäure" wird im Sinne der vorliegenden Erfindung vorzugsweise eine vorzugsweise aliphatische Monocarbonsäure verstanden, die genau eine -C(=O)-OH-Gruppe aufweist. Vorzugsweise weisen die erfindungsgemäß eingesetzten Monocarbonsäuren 1 bis 64 Kohlenstoffatome, besonders bevorzugt 1 bis 36, insbesondere 2 bis 18 oder 3 bis 8 Kohlenstoffatome auf. Vorzugsweise weist die Monocarbonsäure dabei wenigstens eine Hydroxyl-Gruppe auf.

Wird als Komplexierungsmittel (A3aa) wenigstens eine organische Mono- oder Polycarbonsäure, welche vorzugsweise kein(e) Stickstoffatom(e) aufweist, und/oder deren Anionen, eingesetzt, so weist die wenigstens eine organische Mono- oder Polycarbonsäure und/oder deren Anionen vorzugsweise wenigstens eine Carboxyl-Gruppe beziehungsweise Carboxylat-Gruppe auf, die an einen organischen Rest mit 1-8 Kohlenstoffatomen gebunden ist, wobei der organische Rest gegebenenfalls mit wenigstens einem, vorzugsweise wenigstens einem oder wenigstens zwei, Substituenten ausgewählt aus der Gruppe bestehend aus Hydroxyl-Gruppen, EsterGruppen und Ether-Gruppen substituiert sein kann.

Vorzugsweise ist die organische Mono- oder Polycarbonsäure ausgewählt aus der Gruppe bestehend aus Mono- und Polycarbonsäuren und/oder deren Anionen, die in α-, β- oder γ-Stellung zur wenigstens einen Carboxyl-Gruppe beziehungsweise Carboxylat-Gruppe eine oder zwei alkoholische Hydroxylgruppe(n) oder Estergruppe(n) oder Ethergruppe(n) aufweisen. Beispiele derartiger Säuren sind: Glykolsäure (Hydroxyessigsäure), Milchsäure, γ-Hydroxypropionsäure, α-Methylolpropionsäure, α,α'-Dimethylol-propionsäure, Weinsäure, Hydroxyphenylessigsäure, Äpfelsäure, Citronensäure und Zuckersäuren wie beispielsweise Gluconsäure und Schleimsäure. Zyklische oder aromatische Carbonsäuren sind ebenfalls geeignet, wenn die Hydroxyl-, Ester- oder Ethergruppen so zur Carboxylgruppe angeordnet sind, dass eine Bildung von Komplexen möglich wird. Beispiele hierfür sind Salicylsäure, Gallussäure, Hydroxybenzoesäure und 2,4-Dihydroxybenzoesäure. Beispiele geeigneter Carbonsäuren mit einer Ethergruppe oder Estergruppe sind Methoxyessigsäure, Methoxyessigsäuremethylester, Methoxyessigsäure-isopropylester, Dimethoxy-essigsäure, Ethoxyessigsäure, Propoxyessigsäure, Butoxyessigsäure, 2-Ethoxy-2-Methylpropansäure, 3-Ethoxypropansäure, Butoxypropansäure und deren Ester, Butoxybuttersäure und α- oder β-Methoxypropionsäure. Optisch aktive Carbonsäuren wie Milchsäure können in der L-Form, in der D-Form oder als Racemat eingesetzt werden. Vorzugsweise werden Milchsäure (in optisch aktiver Form, bevorzugt als L-Form, oder als Racemat) und/oder Dimethylolpropionsäure verwendet.

Es können jedoch auch organische Mono- oder Polycarbonsäuren und/oder deren Anionen als Komplexierungsmittel (A3aa) eingesetzt werden, welche Stickstoffatome aufweisen, insbesondere Aminomonocarbonsäuren und/oder Aminopolycarbonsäuren, und/oder deren Anionen.

Unter dem Begriff "Aminopolycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist, und zudem wenigstens eine Amino-Gruppe, beispielsweise wenigstens eine primäre und/oder sekundäre und/oder tertiäre Amino-Gruppe, insbesondere wenigstens eine oder wenigstens zwei tertiäre Amino-Gruppen, aufweist. Vorzugsweise weisen die erfindungsgemäß eingesetzten Aminopolycarbonsäuren 2 bis 64 Kohlenstoffatome, besonders bevorzugt 2 bis 36, insbesondere 3 bis 18 oder 3 bis 8 Kohlenstoffatome auf. Beispiele von Aminopolycarbonsäuren sind Ethylendiamintetraessigsäure (EDTA), Diethylentriaminpentaessigsäure (DTPA), Nitrilotriessigsäure (NTA), Asparaginsäure, Methylglycindiessigsäure (MGDA), β-Alanindiessigsäure (β-ADA), Imidosuccinat (IDS), Hydroxyethyleniminodiacetat (HEIDA) und N-(2-Hydroxyethyl)-**ethylendiamin-N, N, N'-triessigsäure** (HEDTA).

Unter dem Begriff "Aminomonocarbonsäure" wird im Sinne der vorliegenden Erfindung vorzugsweise eine Carbonsäure verstanden, welche genau eine Carboxyl-Gruppe aufweist, und zudem wenigstens eine Amino-Gruppe, beispielsweise wenigstens eine primäre und/oder sekundäre und/oder tertiäre Amino-Gruppe, insbesondere wenigstens eine oder wenigstens zwei tertiäre Amino-Gruppen, aufweist. Vorzugsweise weisen die erfindungsgemäß eingesetzten Aminomonocarbonsäuren 2 bis 64 Kohlenstoffatome, besonders bevorzugt 2 bis 36, insbesondere 3 bis 18 oder 3 bis 8 Kohlenstoffatome auf. Vorzugsweise weist die Aminomonocarbonsäure dabei wenigstens eine Hydroxyl-Gruppe, bevorzugt zwei Hydroxyl-Gruppen, auf. Ein Beispiel einer Aminomonocarbonsäure, welche im Rahmen der vorliegenden Erfindung besonders bevorzugt ist, ist Bicin (N,N'-Bis((2-Hydroxyethyl)glycin). Andere Beispiele sind Glycin, Alanin, Lysin, Cystein, Serin, Threonin, Asparagin, β-Alanin, 6-Aminocapronsäure, Leucin und Dihydroxyethylglycin (DHEG) sowie Panthothensäure.

Als Komplexierungsmittel (A3aa) eignet sich beispielsweise zudem wenigstens ein Polyamin oder Monoamin.

Unter dem Begriff "Polyamin" wird im Sinne der vorliegenden Erfindung vorzugsweise eine Verbindung verstanden, welche wenigstens zwei Amino-Gruppen wie primäre oder sekundäre oder tertiäre Amino-Gruppen aufweist. Die Amino-Gruppen können auch als Oxim-Gruppen vorliegen. Insgesamt kann ein Polyamin jedoch vorzugsweise bis einschließlich 10 Amino-Gruppen aufweisen, das heißt zusätzlich zu den wenigstens zwei Amino-Gruppen noch bis zu einschließlich 8 weitere, das heißt 1, 2, 3, 4, 5, 6, 7 oder 8, vorzugsweise bis zu einschließlich 5 weitere Amino-Gruppen enthalten, bei denen es sich vorzugsweise um primäre oder sekundäre oder tertiäre Amino-Gruppen handelt. Vorzugsweise ist das Polyamin ein Diamin oder Triamin, besonders bevorzugt ein Diamin. Vorzugsweise weisen die erfindungsgemäß eingesetzten Polyamine 2 bis 64 Kohlenstoffatome, besonders bevorzugt 2 bis 36, insbesondere 3 bis 18 oder 3 bis 8 Kohlenstoffatome auf. Wenigstens eines der Kohlenstoffatome ist vorzugsweise mit einer Hydroxyl-Gruppe substituiert. Besonders bevorzugt sind daher Hydroxyalkylpolyamine. Beispiele von Polyaminen sind N,N,N',N'-Tetrakis-2-hydroxyethylethylendiamin (THEED), N,N,N',N'-Tetrakis-2-hydroxypropylethylendiamin (Quadrol), Guanidin, Diethylentriamin und Diphenylcarbazid sowie Diacetyldioxim.

Unter dem Begriff "Monoamin" wird im Sinne der vorliegenden Erfindung vorzugsweise ein vorzugsweise aliphatisches Monoamin verstanden, das genau eine Amino-Gruppe, wie beispielsweise genau eine primäre oder sekundäre oder insbesondere tertiäre Amino-Gruppe aufweist. Vorzugsweise weisen die erfindungsgemäß eingesetzten Monoamine 1 bis 64 Kohlenstoffatome, besonders bevorzugt 1 bis 36, insbesondere 2 bis 18 oder 3 bis 8 Kohlenstoffatome auf. Vorzugsweise weist das Monoamin dabei wenigstens eine Hydroxyl-Gruppe auf. Ein Beispiel für ein solches Monoamin ist Triisopropanolamin.

Als Komplexierungsmittel (A3aa) eignet sich beispielsweise zudem wenigstens eine Sulfonsäure. Beispiele für geeignete Sulfonsäuren sind Taurin, 1,1,1-Trifluoromethansulfonsäure, Tiron und Amidosulfonsäure.

In einer bevorzugten Ausführungsform ist wenigstens eine zur Komplexierung von Bismut geeignete wenigstens zweizähnige Komplexierungsmittel als Komponente (A3aa) eine Verbindung der allgemeinen Formel (1) oder ein Anion dieser Verbindung 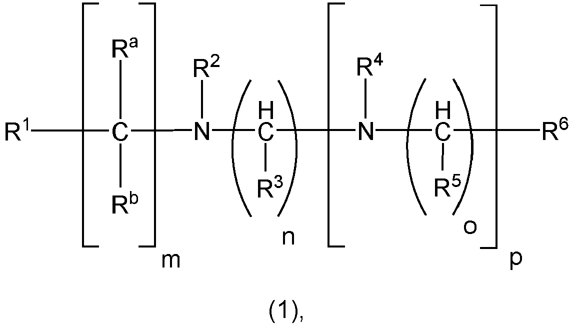 in der
R¹ für einen mit wenigstens einer OH-Gruppe substituierten C₁₋₆-aliphatischen Rest steht,
m für 0 oder 1 steht,
R^{a} und R^{b} jeweils unabhängig voneinander ausgewählt sind aus der Gruppe bestehend aus H und C₁₋₆-aliphatischen Resten, die gegebenenfalls mit wenigstens einer OH-Gruppe substituiert ist,
R², R³, R⁴ und R⁵ jeweils unabhängig voneinander für H oder für einen gegebenenfalls mit wenigstens einer OH-Gruppe substituierten C₁₋₆-aliphatischen Rest stehen,
n für 1 oder 2 steht,
o für 1 oder 2 steht,
p für 0, 1, 2 oder 3 steht, und
R⁶ für C(=O)OH, S(=O)₂OH, P(=O)(OH)₂, NR⁷R⁸ oder für einen C₁₋₆-aliphatischen Rest steht, der mit wenigstens einer OH-Gruppe substituiert ist,
   wobei R⁷ und R⁸ jeweils unabhängig voneinander ausgewählt sind aus der Gruppe bestehend aus H und C₁₋₆-aliphatischen Resten, die gegebenenfalls mit wenigstens einer OH-Gruppe substituiert sind,
   unter der Bedingung, dass wenigstens einer der Reste R⁷ und R⁸ für einen C₁₋₆-aliphatischen Rest steht, der mit wenigstens einer OH-Gruppe substituiert ist.

Der Ausdruck "C₁-₆-aliphatischer Rest" umfasst im Sinne dieser Erfindung vorzugsweise acyclische gesättigte oder ungesättigte, vorzugsweise gesättigte, aliphatische Kohlenwasserstoffreste, das heißt C₁₋₆-aliphatische Reste, die jeweils verzweigt oder unverzweigt sowie unsubstituiert oder gegebenenfalls wenigstens einfach, beispielsweise zweifach oder dreifach, vorzugsweise aber einfach, mit wenigstens einer, gegebenenfalls auch zwei oder drei, OH-Gruppe(n) substituiert sein können, mit 1 bis 6, das heißt 1, 2, 3, 4 5 oder 6, Kohlenstoffatomen, das heißt C₁₋₆-Alkanyle, C₂₋₆-Alkenyle und C₂₋₆-Alkinyle. Dabei weisen Alkenyle mindestens eine C-C-Doppelbindung und Alkinyle mindestens eine C-C-Dreifachbindung auf. Besonders bevorzugt ist ein C₁₋₆-aliphatischer Rest ein C₁₋₆-Alkanyl. Bevorzugt ist ein C₁₋₆-aliphatischer Rest aus der Gruppe ausgewählt, die Methyl, Ethyl, n-Propyl, 2-Propyl, n-Butyl, iso-Butyl, sec.-Butyl, tert.-Butyl, n-Pentyl, iso-Pentyl, neo-Pentyl und n-Hexyl umfasst. Besonders bevorzugt ist ein C₁₋₆-aliphatischer Rest aus der Gruppe ausgewählt, die Ethyl, n-Propyl, 2-Propyl, n-Butyl, iso-Butyl und sec.-Butyl, insbesondere Ethyl, n-Propyl und 2-Propyl, umfasst. Ein C₁₋₄-aliphatischer Rest entspricht im Sinne der vorliegenden Erfindung einem C₁₋₆-aliphatischen Rest und den für diesen vorstehend genannten bevorzugten Ausführungsformen, mit dem Unterschied, dass ein solcher C₁₋₄-aliphatischer Rest nur 1 bis 4, das heißt, 1, 2, 3 oder 4 Kohlenstoffatome aufweist.

Besonders bevorzugt ist die Komponente (A3aa) ausgewählt ist aus der Gruppe bestehend aus Ethylendiamintetraessigsäure, Milchsäure, N,N,N',N'-Tetrakis-2-hydroxypropylethylendiamin, N,N'-Bis((2-Hydroxyethyl)-glycin und N, N, N', N'-Tetrakis-2-hydroxyethylethylendiamin, ganz besonders bevorzugt N,N'-Bis((2-Hydroxyethyl)-glycin (Bicin).

Wird Ethylendiamintetraessigsäure und/oder deren Anionen als Komplexierungsmittel (A3aa) eingesetzt, so ist dieses in der wässrigen Beschichtungszusammensetzung (A) vorzugsweise in einem Anteil in einem Bereich von < 100 mol-%, besonders bevorzugt in einem Bereich von 20 bis 60 mol-%, jeweils bezogen auf die Gesamtmenge des in der Beschichtungszusammensetzung (A) enthaltenen Bismuts, vorhanden. Wird N,N'-Bis((2-Hydroxyethyl)-glycin als Komplexierungsmittel (A3aa) eingesetzt, so ist dieses in der wässrigen Beschichtungszusammensetzung (A) vorzugsweise in einem Anteil in einem Bereich von < 900 mol-%, besonders bevorzugt in einem Bereich von 100 bis 700 mol-%, jeweils bezogen auf die Gesamtmenge des in der Beschichtungszusammensetzung (A) enthaltenen Bismuts, vorhanden. Wird N,N,N',N'-Tetrakis-2-hydroxyethylethylendiamin als Komplexierungsmittel (A3aa) eingesetzt, so ist dieses in der wässrigen Beschichtungszusammensetzung (A) vorzugsweise in einem Anteil in einem Bereich von 100 bis 600 mol-%, jeweils bezogen auf die Gesamtmenge des in der Beschichtungszusammensetzung (A) enthaltenen Bismuts, vorhanden. Wird N,N,N',N'-Tetrakis-2-hydroxypropylethylendiamin als Komplexierungsmittel (A3aa) eingesetzt, so ist dieses in der wässrigen Beschichtungszusammensetzung (A) vorzugsweise in einem Anteil in einem Bereich von 50 bis 300 mol-%, jeweils bezogen auf die Gesamtmenge des in der Beschichtungszusammensetzung (A) enthaltenen Bismuts, vorhanden.

Der molare Anteil von gegebenenfalls wenigstens einer in der wässrigen Beschichtungszusammensetzung (A) enthaltenen Aminopolycarbonsäure, insbesondere von als Komponente (A3aa) eingesetzter Aminopolycarbonsäure, ist vorzugsweise wenigstens um den Faktor 15 oder 20, besonders bevorzugt wenigstens um den Faktor 30 oder 40 oder 50 oder 60 oder 70 oder 80 oder 90 oder 100 oder 1 000 geringer als die Gesamtmenge des in der wässrigen Beschichtungszusammensetzung (A) enthaltenen Bismuts in Mol, vorzugsweise jeweils bezogen auf das Gesamtgewicht der wässrigen Zusammensetzung (A). Die Anwesenheit solcher Säuren kann gegebenenfalls zu Problemen bezüglich der Tauchbadstabilität und der Abwasserbehandlung durch eine Anreicherung dieser Verbindungen im Tauchbad führen.

### Komponente (A4)

Die erfindungsgemäße Beschichtungszusammensetzung (A) enthält, in einer in (A) gelöst vorliegenden Form (auch genannt "in gelöster Form"), Lithium (A4) in einem Anteil von nicht mehr als 300 ppm, bezogen auf das Gesamtgewicht der Beschichtungszusammensetzung (A).

Es hat sich gezeigt, dass eine gewisser Anteil Lithium wesentlich ist für den Erhalt eines verbesserten Korrosionsschutzes. Genauso hat sich allerdings gezeigt, dass eine Überschreitung des oben genannten Grenzwerts wiederum signifikant negative Auswirkungen auf die herzustellende Beschichtung hat. Denn eine Überschreitung bedeutet, dass eine schlecht konditionierte Beschichtung erhalten wird (Löcher, Stippen, schlechte Haftung) oder sogar ein Abscheidungsprozess vollständig unmöglich wird.

Die Bedingungen und Merkmale hinsichtlich des in "gelöst vorliegender Form" vorliegenden Lithiums und dessen Mengen (als Metall berechnet) entsprechen dabei grundsätzlich den oben für Bismut beschriebenen Umständen. Zudem wird analog zum Bismut auch an dieser Stelle unter dem Begriff Lithium vorzugsweise kationische Lithiumatome verstanden. Das Lithium liegt dabei als Li(I), das heißt mit der Wertigkeit +1, vor.

Demzufolge wird unter dem Begriff "in gelöst vorliegender Form" im Zusammenhang mit der Komponente (A4) der erfindungsgemäßen Beschichtungszusammensetzung (A) vorzugsweise verstanden, dass die Komponente (A4) bei einer Temperatur der Beschichtungszusammensetzung (A) von 20 °C in gelöst vorliegender Form in der Beschichtungszusammensetzung (A) vorliegt. Die Komponente (A4) ist somit, bevor sie in die Beschichtungszusammensetzung (A) eingebracht wird, bevorzugt Teil einer zumindest begrenzt wasserlöslichen Verbindung, insbesondere eines zumindest begrenzt wasserlöslichen Lithiumsalzes. Dies erklärt sich für den Fachmann bereits daraus, dass die erfindungsgemäße Beschichtungszusammensetzung wässrig ist. Durch Einbringen eines zumindest begrenzt wasserlöslichen Lithiumsalzes in die Beschichtungszusammensetzung (A) wird dann zumindest ein Teil des Lithiumsalzes gelöst, sodass die Zusammensetzung dann die Komponente (A4) enthält.

Vorzugsweise ist die Komponente (A4) erhältlich aus wenigstens einem Lithiumsalz, bevorzugt einem Lithiumsalz ausgewählt aus der Gruppe bestehend aus Lithiumacetat, Lithiumcarbonat, Lithiumnitrat, Lithiumhydroxid, Lithiumphosphat, Lithiumformiat, Lithiumsalicylat, Lithiumsulphat, Lithiummolybdat, Lithiumtetraborat.

Vorzugsweise enthält die Beschichtungszusammensetzung (A) nicht mehr als 250 ppm, besonders bevorzugt nicht mehr als 200 ppm, ganz besonders bevorzugt nicht mehr 150 ppm oder nicht mehr als 100 ppm, insbesondere nicht mehr als 70 ppm oder 50 ppm oder nicht mehr als 40 ppm oder nicht mehr als 30 ppm Lithium in einer in (A) gelösten Form, jeweils bezogen auf das Gesamtgewicht der Beschichtungszusammensetzung (A). Darunter bevorzugte Bereiche sind 2,5 bis 250 ppm, 5 bis 200 ppm, 7,5 bis 150 ppm, 10 bis 100 ppm, 12,5 bis 70 ppm, 12,5 bis 50 ppm oder 12,5 bis 40 ppm beziehungsweise 12,5 bis 30 ppm, jeweils bezogen auf das Gesamtgewicht der Beschichtungszusammensetzung (A).

Der Anteil beziehungsweise die Menge an Lithium (A4) kann wiederum über die ICP-OES- Methode (siehe Beispielteil) erhalten werden.

Selbstverständlich kann die Beschichtungszusammensetzung auch noch Lithium in einer in (A) ungelösten Form (das heißt in ungelöst vorliegender Form) enthalten. Dies ist beispielsweise der Fall beim Einsatz von Lithiumsalzen, die im Bereich der eingesetzten Anteilsmengen nicht vollständig gelöst werden und damit teilweise in ungelöster Form in (A) vorliegen.

Unter dem Begriff "in ungelöst vorliegender Form" im Zusammenhang mit Lithium, welches in der erfindungsgemäßen Beschichtungszusammensetzung (A) enthalten sein kann, sind wiederum die weiter oben für Bi beschriebenen Prinzipien einschlägig. Demzufolge wird darunter vorzugsweise verstanden, dass dieses Lithium bei einer Temperatur der Beschichtungszusammensetzung (A) von 20°C in ungelöst vorliegender Form vorliegt.

Der Anteil von in der Beschichtungszusammensetzung (A) in ungelöster Form vorliegendem Lithium kann wiederum unter Einbindung der ICP-OES- Methode errechnet werden (siehe Beispielteil).

### Optionale Komponente (A6)

In einer bevorzugten Ausführungsform der vorliegenden Erfindung enthält die Beschichtungszusammensetzung (A) zudem Kupfer, insbesondere bevorzugt jedenfalls, aber nicht zwingend ausschließlich, Kupfer in einer in (A) gelösten Form (A6a).

Es hat sich gezeigt, dass sich hierdurch nochmals die korrosionsinhibierenden Eigenschaften verbessern lassen, insbesondere in Bezug auf Substrate, die sowohl Aluminium als auch Stahl-basiert sind (also hinsichtlich ihres Metalltyps unterschiedliche Bereiche aufweisen). Denn der Umstand, dass entsprechende Beschichtungszusammensetzungen in Bezug auf beide Metalltypen einen hervorragenden Korrosionsschutz bieten können, ist in Bezug auf die zunehmende Wichtigkeit solcher Substrate (Leichtbauweise) besonders vorteilhaft.

Die Bedingungen und Merkmale hinsichtlich des in "gelöst vorliegender Form" oder "in ungelöster Form" vorliegenden Kupfers und dessen Mengen (als Metall berechnet) entsprechen dabei grundsätzlich den oben für Bismut und Lithium beschriebenen Umständen. Zudem wird analog zum Bismut und Lithium auch an dieser Stelle unter dem Begriff Kupfer vorzugsweise kationische Kupferatome verstanden. Das Kupfer liegt dabei als bevorzugt als Cu(II), das heißt mit der Wertigkeit +2, vor.

Für den Fall, dass Kupfer enthalten ist, ist es bevorzugt, dass der Anteil an Kupfer (A6a), welches in einer in (A) gelösten Form vorliegt, nicht geringer als 5 ppm, bevorzugt nicht geringer als 10 ppm, insbesondere bevorzugt nicht geringer als 15 ppm oder auch 20 ppm, ist (jeweils bezogen auf die Gesamtmenge der Beschichtungszusammensetzung (A)). Nochmals bevorzugt sind Mengen von in gelöster Form vorliegendem Kupfer von 5 bis 1000 ppm, bevorzugt 10 bis 750 ppm, nochmals bevorzugt 15 bis 500 ppm oder auch 20 bis 250 ppm.

Vorzugsweise ist die Komponente (A6a) erhältlich aus wenigstens einem Kupfersalz, bevorzugt einem Kupfersalz ausgewählt aus der Gruppe bestehend aus Kupfernitrat, Kupfersulfat und Kupferacetat.

Der Anteil beziehungsweise die Menge an Kupfer (A6a) kann wiederum über die ICP-OES- Methode (siehe Beispielteil) erhalten werden.

Wie schon oben angegeben, kann die Beschichtungszusammensetzung auch noch Kupfer in einer in (A) ungelösten Form enthalten. Dies ist beispielsweise der Fall beim Einsatz von Kupfersalzen, die im Bereich der eingesetzten Anteilsmengen nicht vollständig gelöst werden und damit teilweise in ungelöster Form in (A) vorliegen. Auch dieser Anteil kann wiederum über die ICP-OES Methode ermittelt werden.

### Komponente (A5)

Wie weiter unten genauer dargelegt, enthält die erfindungsgemäße Beschichtungszusammensetzung (A) bevorzugt einen Bismut-basierten Vernetzungskatalysator. Insbesondere für diesen Fall ist es im Rahmen der vorliegenden Erfindung bevorzugt, dass der Anteil von in (A) vorliegendem Phosphor (A5) in der Beschichtungszusammensetzung eine Menge von 100 ppm, bezogen auf das Gesamtgewicht der Beschichtungszusammensetzung (A), nicht überschreitet.

Es hat sich gezeigt, dass die Überschreitung des oben genannten Grenzwerts bei üblichen Vernetzungstemperaturen zu einer deutlich verringerten Vernetzungsfähigkeit der vorhandenen Bindemittel- und Vernetzerkomponenten und damit einer herabgesetzten Vernetzungsdichte des kathodisch abzuscheidenden Beschichtungsfilms führt. Ohne an eine bestimmte Theorie gebunden sein zu wollen, ist davon auszugehen, dass durch Reaktion des Phosphors mit Bismut dem Beschichtungsmittel der Katalysator entzogen wird und somit lediglich bei sehr hohen Temperaturen eine ausreichende Vernetzung bewirkt werden kann. Demnach ist es bevorzugt, dass die Menge an Phosphor (wiederum als Metall gerechnet), diesen Wert nicht überschreitet.

Bevorzugt ist, dass der Anteil an in gelöster Form vorliegendem Phosphor, bezogen auf das Gesamtgewicht der Beschichtungszusammensetzung, eine Menge von 75 ppm oder 60 ppm, nochmals bevorzugt 45 ppm oder auch 30 ppm, besonders bevorzugt 20 ppm oder 10 ppm, nicht überschreitet.

### Weitere optionale Komponenten der Beschichtungszusammensetzung (A)

Die erfindungsgemäß eingesetzte wässrige Beschichtungszusammensetzung (A) kann zudem je nach erwünschter Anwendung wenigstens ein Pigment (A7) enthalten.

Vorzugsweise ist ein solches in der wässrigen Beschichtungszusammensetzung (A) enthaltenes Pigment (A7) ausgewählt aus der Gruppe bestehend aus organischen und anorganischen, farbgebenden und füllenden Pigmenten (letztere werden auch Füllstoffe genannt).

Beispiele für geeignete anorganische farbgebende Pigmente (A7) sind Weißpigmente wie Zinkoxid, Zinksulfid, Titandioxid, Antimonoxid oder Lithopone; Schwarzpigmente wie Ruß, Eisen-Mangan-Schwarz oder Spinellschwarz; Buntpigmente wie Kobaltgrün oder Ultramaringrün, Kobaltblau, Ultramarinblau oder Manganblau, Ultramarinviolett oder Kobalt- und Manganviolett, Eisenoxidrot, Molybdatrot oder Ultramarinrot; Eisenoxidbraun, Mischbraun, Spinell- und Korundphasen; oder Eisenoxidgelb, Nickeltitangelb, oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver.

Der Pigment-Gehalt in den wässrigen Beschichtungszusammensetzungen (A) kann je nach Verwendungszweck und nach der Natur der Pigmente (A7) variieren. Vorzugsweise liegt der Gehalt, jeweils bezogen auf das Gesamtgewicht der wässrigen Beschichtungszusammensetzung (A) im Bereich von 0,1 bis 30 Gew.-% oder im Bereich von 0,5 bis 20 Gew.-%, besonders bevorzugt im Bereich von 1,0 bis 15 Gew.-%, ganz besonders bevorzugt im Bereich von 1,5 bis 10 Gew.-% und insbesondere im Bereich von 2,0 bis 5,0 Gew.-% oder im Bereich von 2,0 bis 4,0 Gew.-% oder im Bereich von 2,0 bis 3,5 Gew.-%.

Die Beschichtungszusammensetzung (A) kann je nach erwünschter Anwendung ein oder mehrere üblicherweise eingesetzte Additive (A8) enthalten. Vorzugsweise sind diese Additive (A8) ausgewählt aus der Gruppe bestehend aus Benetzungsmitteln, Emulgatoren, welche vorzugsweise die Komponente (A9) nicht beinhalten, Dispergiermitteln, oberflächen-aktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, vorzugsweise HitzeStabilisatoren, Prozess-Stabilisatoren und UV- und/oder Licht-Stabilisatoren, Katalysatoren, Füllstoffen, Wachsen, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf das Gesamtgewicht der wässrigen Beschichtungszusammensetzung (A), bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.- % und insbesondere bei 0,1 bis 2,5 Gew.-%.

Im Rahmen der vorliegenden Erfindung ist es bevorzugt, dass die Beschichtungszusammensetzung einen Bismut-basierten Vernetzungskatalysator (V) enthält. Als Vernetzungskatalysator (V) werden im Rahmen der vorliegenden Erfindung Katalysatoren bezeichnet, die die Vernetzung des Bindemittels (A1) mit dem Vernetzungsmittel (A2) katalysieren, genauer gesagt also die Reaktion entsprechender reaktiver funktioneller Gruppen des Bindemittels (A1) mit komplementären reaktiven funktionellen Gruppen des Vernetzungsmittels (A2) katalysieren. Eine bevorzugte Kombination funktioneller Gruppen besteht demnach augenscheinlich aus isocyanatreaktiven Gruppen des Bindemittels (A1), nochmals bevorzugt Hydroxygruppen, und Isocyanatgruppen des Vernetzungsmittels (A2) (welche bevorzugt nach Deblockierung von blockierten Isocyanatgruppen entstehen).

Der Bismut-basierte Vernetzungskatalysator umfasst bevorzugt Bismut in den bekannten Oxidationsstufen. Wie bereits oben angegeben, umfasst die Beschichtungszusammensetzung ohnehin bereits Bismut, bevorzugt jedenfalls auch Bismut in einer in (A) gelösten Form (A3a). Demzufolge kann dieses Bismut, gegebenenfalls auch nach Überführung der Komponenten (A3b) unter Umsetzung mit der Komponente (A3aa) in die Komponente (A3a) als Vernetzungskatalysator (V) dienen. Genauso möglich ist, dass das vorhandene Bismut (A3b) eine katalytische Wirkung aufweist.

Daraus folgt, dass im Rahmen der vorliegenden Erfindung bevorzugt ein Bismutbasierter Katalysator enthalten ist, welcher in der Komponente (A3), bevorzugt jedenfalls, aber nicht zwingend ausschließlich, in der Komponente (A3a), enthalten ist. Daraus ergibt sich der technische Vorteil, dass auf den Einsatz eines separaten Vernetzungskatalysators verzichtet werden kann, da dieser bereits ohnehin enthalten ist.

### Verfahren zur Herstellung der Beschichtungszusammensetzung (A)

Gegenstand der vorliegenden Erfindung ist auch ein Verfahren zur Herstellung einer Beschichtungszusammensetzung (A).

Grundsätzlich kann die Herstellung nach den insbesondere für kathodische Elektrotauchlacke bekannten und gängigen Herstellverfahren umfassend das Mischen und Dispergieren der enthaltenen Komponenten in dafür typischer Reihenfolge durchgeführt werden.

Vorzugsweise umfasst das Verfahren
das teilweises Überführen wenigstens einer in Wasser unlöslichen Bismut-Verbindung in wenigstens eine in Wasser lösliche Bismut-Verbindung in Wasser durch teilweise Umsetzung der in Wasser unlöslichen Bismut-Verbindung mit wenigstens einem zur Komplexierung von Bismut geeigneten wenigstens zweizähnigen Komplexierungsmittel (A3aa), gegebenenfalls in Gegenwart wenigstens einer weiteren Komponente der erfindungsgemäßen Beschichtungszusammensetzung, unter Erhalt einer wenigstens die Komponenten (A3a), (A3b) und (A3aa) enthaltenen Mischung, und
gegebenenfalls Mischen der so erhaltenen Mischung mit den gegebenenfalls noch fehlenden Komponenten der erfindungsgemäßen Beschichtungszusammensetzung unter Erhalt der Beschichtungszusammensetzung (A).

Bevorzugt ist allerdings, dass im Rahmen des Verfahrens eine in Wasser unlösliche Bismutverbindung und/oder eine in Wasser nicht vollständig lösliche Bismutverbindung, bevorzugt unter weiterem Zusatz einer Komponente (A3aa), mit den weiteren Bestandteilen der Beschichtungszusammensetzung gemischt wird, ohne dass die vorgenannte Bismutverbindung und die Komponente (A3aa) in einem separaten Mischungsschritt miteinander in Kontakt gebracht werden.

Vorzugsweise ist die eingesetzte in Wasser unlösliche Bismut-Verbindung Bestandteil einer Pigmentpaste, welche wenigstens ein Pigment (A7) enthält.

Vorzugsweise ist die erfindungsgemäße Beschichtungszusammensetzung (A) erhältlich, ohne dass eine separate Herstellung einer wässrigen Lösung der Komponente (A3a) erforderlich ist. Dies erspart Zeit und Kosten und mögliche auftretende Probleme hinsichtlich der Stabilität der Beschichtungszusammensetzung (A) bei einer Zugabe einer solchen wässrigen Lösung der Komponente (A3a), insbesondere wenn die Beschichtungszusammensetzung in einem Tauchlackbad zur zumindest teilweisen Beschichtung elektrisch leitfähiger Substrate eingesetzt wird.

Nochmals bevorzugt umfasst das Verfahren wenigstens den Schritt (0), nämlich
(0) teilweises Überführen wenigstens einer in Wasser unlöslichen Bismut-Verbindung durch teilweise Umsetzung von dieser Verbindung mit wenigstens einem zur Komplexierung von Bismut geeigneten wenigstens zweizähnigen Komplexierungsmittel (A3aa) in wenigstens eine in Wasser lösliche Bismut-Verbindung (A3a) in Wasser, in Gegenwart wenigstens einer der Komponenten (A7) bis (A9) und gegebenenfalls (A1) und/oder (A2), unter Erhalt einer wenigstens die Komponenten (A3a), (A3b) und (A3aa) sowie wenigstens einer der Komponenten (A7) bis (A9) und/oder gegebenenfalls (A1) und/oder (A2),der Beschichtungszusammensetzung (A) enthaltenen Mischung.

Gegebenenfalls umfasst das erfindungsgemäße Verfahren nach Durchführung von Schritt (0) wenigstens einen weiteren Schritt, nämlich ein
Mischen der nach Durchführung von Schritt (0) erhaltenen Mischung gegebenenfalls mit der Komponente (A1) und gegebenenfalls der Komponente (A2) sowie gegebenenfalls wenigstens einer der Komponenten (A7) bis (A9) sowie gegebenenfalls weiteren Komponenten der Beschichtungszusammensetzung unter Erhalt der Beschichtungszusammensetzung (A).

Vorzugsweise beträgt die Dauer des Schritts (0) wenigstens 2 oder wenigstens 4 oder wenigstens 6 oder wenigstens 8 oder wenigstens 10 oder wenigstens 12 oder wenigstens 14 oder wenigstens 16 oder wenigstens 18 oder wenigstens 20 oder wenigstens 22 oder wenigstens 24 Stunden. Schritt (0) wird vorzugsweise unter Rühren bei einer Temperatur im Bereich von 18 bis 23°C durchgeführt.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihrer Herstellung.

Weiterhin bevorzugt ist es, dass bei der Herstellung der Beschichtungszusammensetzung das bevorzugt vorhandene wenigstens eine Pigment (A7) als Bestandteil einer wässrigen Lösung oder Dispersion eingesetzt wird, welche mindestens einen Anteil der Komponente (A1) und gegebenenfalls (A2) enthält.

Das wenigstens ein Additiv (A9) kann dabei als Bestandteil der zur Herstellung der Beschichtungszusammensetzung (A) eingesetzten wässrigen Lösung oder Dispersion vorliegen, welche neben dem bevorzugt enthaltenen Pigment (A7) die Komponenten (A1) und gegebenenfalls (A2) enthält.

Die Komponenten (A4) und gegebenenfalls (A6), insbesondere (A6a), können im Rahmen des Herstellprozesses beispielsweise durch teilweises oder vollständiges Lösen einer Lithium- beziehungsweise Kupferverbindung, insbesondere eines Salzes, in Wasser in Gegenwart wenigstens einer der weiteren Komponenten der Beschichtungszusammensetzung, insbesondere der Komponenten (A7) bis (A9) und gegebenenfalls (A1) und/oder (A2), eingebracht werden. Genauso ist es möglich, dass die Komponenten (A4) und (A6) beziehungsweise (A6a) als in Wasser lösliche Verbindung lediglich in Wasser gelöst werden und dann als wässrige Lösung in die Beschichtungszusammensetzung eingebracht werden.

### Verfahren zur zumindest teilweisen Beschichtung eines elektrisch leitfähigen Substrats mit einem erfindungsgemäßen Beschichtungsmittel

Die vorliegende Erfindung betrifft auch ein Verfahren zur zumindest teilweisen Beschichtung eines elektrisch leitfähigen Substrats mit einem erfindungsgemäßen Beschichtungsmittel, das heißt insbesondere mit einem Elektrotauchlack.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich des hier beschriebenen Verfahrens zur zumindest teilweisen Beschichtung eines elektrisch leitfähigen Substrats.

### Elektrisch leitfähiges Substrat

Als erfindungsgemäß eingesetztes elektrisch leitfähiges Substrat eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignen sich verzinkter Stahl und Aluminium. Zudem eignen sich als Substrate warmgewalzter Stahl, hochfester Stahl, Zn/Mg-Legierungen und Zn/Ni-Legierungen. Als Substrate eignen sich insbesondere Teile von Karosserien oder vollständige Karosserien von zu produzierenden Automobilen. Das erfindungsgemäße Verfahren kann auch zur Bandbeschichtung (Coil-Coating) eingesetzt werden. Bevor das jeweilige elektrisch leitfähige Substrat eingesetzt wird, erfolgt vorzugsweise eine Reinigung und/oder Entfettung des Substrats.

Das erfindungsgemäß eingesetzte elektrisch leitfähige Substrat kann ein mit wenigstens einem Metallphosphat vorbehandeltes Substrat sein. Das erfindungsgemäß eingesetzte elektrisch leitfähige Substrat kann zudem ein chromatiertes Substrat sein. Eine solche Vorbehandlung mittels einer Phosphatierung oder Chromatierung, die üblicherweise nach Reinigung des Substrats und vor der Tauchlackierung des Substrats erfolgt, ist insbesondere ein in der Automobilindustrie üblicher Vorbehandlungsschritt. Es ist in diesem Zusammenhang insbesondere wünschenswert, dass eine optional durchgeführte Vorbehandlung unter ökologischen und/oder ökonomischen Gesichtspunkte vorteilhaft ausgestaltet ist. Beispielsweise ist daher ein optionaler Vorbehandlungsschritt möglich, in dem anstelle einer üblichen Trikation-Phosphatierung auf die Nickel-Komponente verzichtet wird und stattdessen eine Dikation-Phosphatierung (enthaltend Zink- und Mangan-Kationen und keine Nickel-Kationen) des erfindungsgemäß eingesetzten elektrisch leitfähigen Substrats noch vor einer Beschichtung mit der wässrigen Beschichtungszusammensetzung (A) durchgeführt wird.

Es ist jedoch gerade ein Vorteil der vorliegenden Erfindung, dass auf eine solche Vorbehandlung des zumindest teilweise zu beschichtenden elektrisch leitfähigen Substrats mittels Phosphatierung mit einem Metallphosphat wie beispielsweise Zinkphosphat oder mittels einer Chromatierung verzichtet werden kann. In einer bevorzugten Ausführungsform ist das erfindungsgemäß eingesetzte elektrisch leitfähige Substrat daher kein solches phosphatiertes oder chromatiertes Substrat.

Das erfindungsgemäß eingesetzte elektrisch leitfähige Substrat kann noch vor einer Beschichtung mit der erfindungsgemäßen wässrigen Beschichtungszusammensetzung (A) mit einer wässrigen Vorbehandlungs-Zusammensetzung vorbehandelt werden, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, umfasst, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung aufgrund der in ihr enthaltenen Komponenten, vorzugsweise zudem aufgrund der entsprechend gewählten Mengenanteile dieser Komponenten einen Fluoro-Komplex wie beispielsweise ein Hexfluorometallat, das heißt insbesondere Hexafluorotitanat und/oder wenigstens ein Hexafluorozirkonat. Vorzugsweise weist die Vorbehandlungs-Zusammensetzung eine Gesamtkonzentration an den Elementen Ti und/oder Zr auf, die 2,5·10⁻⁴ mol/L nicht unterschreitet, aber nicht grösser als 2,0·10⁻² mol/L ist. Die Herstellung solcher Vorbehandlungs-Zusammensetzungen und ihr Einsatz in der Vorbehandlung elektrisch leitfähiger Substrate ist beispielsweise aus WO 2009/115504 A1 bekannt.

Vorzugsweise enthält die Vorbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise wenigstens ein Alumosilikat und hierbei insbesondere ein solches, welches ein atomares Verhältnis von Al zu Si-Atomen von zumindest 1:3 aufweist. Die Herstellung solcher Vorbehandlungs-Zusammensetzungen und ihr Einsatz in der Vorbehandlung elektrisch leitfähiger Substrate ist beispielsweise aus WO 2009/115504 A1 bekannt. Die Alumosilikate liegen vorzugsweise als Nanopartikel mit einer durch dynamische Lichtstreuung bestimmbaren Teilchengröße im Bereich von 1 bis 100 nm. Die durch dynamische Lichtstreuung bestimmbare mittlere Teilchengröße solcher Nanopartikel im Bereich von 1 bis 100 nm wird dabei gemäß DIN ISO 13321 (Datum: 1.10.2004) bestimmt.

In einer bevorzugten Ausführungsform ist das erfindungsgemäß eingesetzte elektrisch leitfähige Substrat jedoch ein Substrat, welches nicht mit einer solchen Vorbehandlungs-Zusammensetzung vorbehandelt worden ist.

Es ist ein Vorteil der erfindungsgemäßen Beschichtungsmittelzusammensetzung, dass nicht nur eine generell gute Korrosionsschutzwirkung erzielt wird, sondern zudem eine optimierte Anpassung der Wirkung an unterschiedliche Substrate eingestellt und erzielt werden kann. In diesem Sinne ist es von besonderem Vorteil, dass Substrate, die hinsichtlich ihres Metalltyps unterschiedliche Bereiche aufweisen, insbesondere sowohl Aluminium-, als auch Stahl-basiert sind, mit ein und derselben Beschichtungszusammensetzung beschichtet werden können und dabei in Summe, das heißt in allen Substratbereichen, eine hervorragende Korrosionsschutzwirkung erzielt wird. Bevorzugte Substrate sind demnach solche, die hinsichtlich ihres Metalltyps unterschiedliche Bereiche aufweisen, insbesondere sowohl Aluminium-, als auch Stahl-basierte Bereiche aufweisen.

Das Verfahren zur zumindest teilweisen Beschichtung eines elektrisch leitfähigen Substrats mit einer erfindungsgemäßen Beschichtungszusammensetzung, insbesondere also einem Elektrotauchlack, umfasst wenigstens einen Schritt (1),
(1) Kontaktieren des als Kathode geschalteten elektrisch leitfähigen Substrats mit der erfindungsgemäßen wässrigen Beschichtungszusammensetzung (A).

Ein weiterer Gegenstand der vorliegenden Erfindung ist ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit der erfindungsgemäßen wässrigen Beschichtungszusammensetzung (A),
   wobei Schritt (1) in wenigstens zwei aufeinanderfolgenden Stufen (1a) und (1b) durchgeführt wird, nämlich
   (1a) bei einer angelegten Spannung in einem Bereich von 1 bis 50 V, welche über eine Dauer von wenigstens 5 Sekunden angelegt wird, und
   (1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihres Einsatzes in Schritt (1) des erfindungsgemäßen Verfahrens zur zumindest teilweisen Beschichtung eines elektrisch leitfähigen Substrats.

### Schritt (1)

Das erfindungsgemäße Verfahren zur zumindest teilweisen Beschichtung eines elektrisch leitfähigen Substrats mit insbesondere einem Elektrotauchlack umfasst wenigstens einen Schritt (1), nämlich ein Kontaktieren des als Kathode geschalteten elektrisch leitfähigen Substrats mit der wässrigen Beschichtungszusammensetzung (A).

Unter dem Begriff "Kontaktierung" beziehungsweise "Kontaktieren" im Sinne der vorliegenden Erfindung wird vorzugsweise ein Eintauchen des mit der Beschichtungszusammensetzung (A) zumindest teilweise zu beschichtenden Substrats in die eingesetzte wässrige Beschichtungszusammensetzung (A), ein Besprühen oder Bespritzen des mit der Beschichtungszusammensetzung (A) zumindest teilweise zu beschichtenden Substrats oder ein Aufwalzen des mit der Beschichtungszusammensetzung (A) zumindest teilweise zu beschichtenden Substrats auf das Substrat verstanden. Insbesondere wird unter dem Begriff "Kontaktierung" beziehungsweise "Kontaktieren" im Sinne der vorliegenden Erfindung ein Eintauchen des mit der Beschichtungszusammensetzung (A) zumindest teilweise zu beschichtenden Substrats in die eingesetzte wässrige Beschichtungs-zusammensetzung (A), verstanden.

Vorzugsweise ist das erfindungsgemäße Verfahren ein Verfahren zur zumindest teilweisen Beschichtung eines im und/oder für den Automobilbau eingesetzten elektrisch leitfähigen Substrats. Das Verfahren kann kontinuierlich in Form einer Bandbeschichtung wie beispielsweise im Coil-Coating-Verfahren oder diskontinuierlich erfolgen.

Mittels Schritt (1) des erfindungsgemäßen Verfahrens erfolgt eine zumindest teilweise Beschichtung des Substrats mit der erfindungsgemäßen wässrigen Beschichtungszusammensetzung (A) durch eine kataphoretische Abscheidung dieser Beschichtungszusammensetzung auf der Substratoberfläche.

Schritt (1) erfolgt mittels Anlegen einer elektrischen Spannung zwischen dem Substrat und wenigstens einer Gegenelektrode. Schritt (1) des erfindungsgemäßen Verfahrens wird vorzugsweise in einem Tauchlackbad durchgeführt. Die Gegenelektrode kann sich dabei in dem Tauchlackbad befinden. Alternativ oder zusätzlich kann die Gegenelektrode auch vom Tauchlackbad separiert vorliegen, beispielsweise über eine für Anionen permeable Anionenaustauscher-Membran. Dabei können Anionen, die während der Tauchlackierung gebildet werden, aus dem Lack durch die Membran in das Anolyt abtransportiert werden, wodurch der pH-Wert im Tauchlackbad reguliert beziehungsweise konstant gehalten werden kann. Vorzugsweise liegt die Gegenelektrode vom Tauchlackbad separiert vor.

Vorzugsweise erfolgt in Schritt (1) des erfindungsgemäßen Verfahrens eine vollständige Beschichtung des Substrats mit der erfindungsgemäßen wässrigen Beschichtungszusammensetzung (A) durch eine vollständige kataphoretische Abscheidung auf der gesamten Substratoberfläche.

Vorzugsweise wird in Schritt (1) des erfindungsgemäßen Verfahrens ein zumindest teilweise zu beschichtendes Substrat zumindest teilweise, vorzugsweise vollständig, in ein Tauchlackbad eingeführt und in diesem Tauchlackbad Schritt (1) durchgeführt.

In Schritt (1) des erfindungsgemäßen Verfahrens wird eine zumindest teilweise Beschichtung des Substrats durch eine zumindest teilweise kataphoretische Abscheidung der wässrigen Beschichtungszusammensetzung (A) erzielt. Die erfindungsgemäße wässrige Beschichtungszusammensetzung (A) wird dabei als Elektrotauchlack auf der Substratoberfläche abgeschieden.

Vorzugsweise wird die erfindungsgemäße wässrige Beschichtungszusammensetzung (A) mit einer elektrisch leitenden Anode und mit dem als Kathode geschalteten elektrisch leitfähigen Substrat in Berührung gebracht. Alternativ muss die wässrige Beschichtungszusammensetzung (A) nicht direkt mit einer elektrisch leitenden Anode in Berührung gebracht werden, beispielsweise wenn die Anode vom Tauchlackbad separiert vorliegt, beispielsweise über eine für Anionen permeable Anionenaustauscher-Membran.

Beim Durchgang von elektrischem Strom zwischen Anode und Kathode wird ein fest haftender Lackfilm auf der Kathode, das heißt auf dem Substrat abgeschieden.

Schritt (1) des erfindungsgemäßen Verfahrens wird vorzugsweise bei einer Tauchbadtemperatur in einem Bereich von 20 bis 45°C, noch bevorzugter in einem Bereich von 22 bis 42°C, besonders bevorzugt in einem Bereich von 24 bis 41°C, ganz besonders bevorzugt in einem Bereich von 26 bis 40°C, insbesondere bevorzugt in einem Bereich von 27 bis 39°C wie beispielsweise in einem Bereich von 28 bis 38°C durchgeführt. In einer anderen bevorzugten Ausführungsform des erfindungsgemäßen Verfahrens wird Schritt (1) bei einer Tauchbadtemperatur von höchstens 40°C, noch bevorzugter von höchstens 38°C, besonders bevorzugt von höchstens 35°C, ganz besonders bevorzugt von höchstens 34°C oder von höchstens 33°C oder von höchstens 32°C oder von höchstens 31°C oder von höchstens 30°C oder von höchstens 29°C oder von höchstens 28°C, durchgeführt.

Vorzugsweise wird die erfindungsgemäße wässrige Beschichtungszusammensetzung (A) in Schritt (1) des erfindungsgemäßen Verfahrens so appliziert, dass die resultierende Elektrotauchlackschicht eine Trockenschichtdicke im Bereich von 5 bis 40 µm, besonders bevorzugt von 10 bis 30 µm, insbesondere bevorzugt von 20 bis 25 µm, aufweist.

### Stufen (1a) und (1b) innerhalb des Schritts (1)

Schritt (1) des erfindungsgemäßen Verfahrens wird in wenigstens zwei aufeinanderfolgenden Stufen (1a) und (1b) durchgeführt, nämlich
(1a) bei einer angelegten Spannung in einem Bereich von 1 bis 50 V, welche über eine Dauer von vorzugsweise wenigstens 5 Sekunden angelegt wird,
   und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

Die Stufen (1a) und (1b) innerhalb des Schritts (1) des erfindungsgemäßen Verfahrens werden vorzugsweise innerhalb einem eingesetzten Tauchlackbad enthaltend die Beschichtungszusammensetzung (A) durchgeführt.

### Stufe (1a)

Während der Durchführung von Stufe (1a) bildet sich eine entsprechende Schicht, welche angereichert ist mit Bismut sowie zudem bevorzugt Kupfer und als eine Vorabscheidungsschicht auf dem elektrisch leitfähigen Substrat bezeichnet werden kann, welche sich beispielsweise durch Röntgenfluoreszenzanalyse nachweisen und quantifizieren lässt. Ohne an eine bestimmte Theorie gebunden sein zu wollen, ist davon auszugehen, dass auch Lithium Teil dieser Schicht ist. Bismut, Lithium und bevorzugt Kupfer liegen dabei vorzugsweise in Form von metallischem Bismut(0), Lithium(0) und bevorzugt Kupfer(0) vor, können aber alternativ oder zusätzlich auch in ihren entsprechend bekannten Oxidationsstufen vorliegen. Diese Vorabscheidungsschicht ist insbesondere weitgehend frei von in der Beschichtungszusammensetzung enthaltenen Komponente (A1) und (A2) und/oder (A3aa) und/oder (A7).

Vorzugsweise wird Stufe (1a) bei einer angelegten Spannung in einem Bereich von 1 bis 45 V oder in einem Bereich von 1 bis 40 V oder in einem Bereich von 1 bis 35 V oder in einem Bereich von 1 bis 30 V oder in einem Bereich von 1 bis 25 V oder in einem Bereich von 1 bis 20 V oder in einem Bereich von 1 bis 15 V oder in einem Bereich von 1 bis 10 V oder in einem Bereich von 1 bis 5 V durchgeführt. In einer weiteren bevorzugten Ausführungsform wird Stufe (1a) bei einer angelegten Spannung in einem Bereich von 2 bis 45 V oder in einem Bereich von 2 bis 40 V oder in einem Bereich von 2 bis 35 V oder in einem Bereich von 2 bis 30 V oder in einem Bereich von 3 bis 25 V oder in einem Bereich von 3 bis 20 V oder in einem Bereich von 3 bis 15 V oder in einem Bereich von 3 bis 10 V oder in einem Bereich von 3 bis 6 V durchgeführt.

Die in Stufe (1a) angelegte Spannung wird über eine Dauer von wenigstens 5 Sekunden, vorzugsweise von wenigstens 10 oder wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1a) aufrechterhalten wird.

In einer bevorzugten Ausführungsform wird die in Stufe (1a) angelegte Spannung über eine Dauer in einem Bereich von wenigstens 5 bis 500 Sekunden oder von 5 bis 500 Sekunden oder von 10 bis 500 Sekunden oder von 10 bis 300 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Einstellung einer Spannung in einem Bereich von 1 bis 50 V, die während der Durchführung von Stufe (1a) über eine Dauer von wenigstens 10 Sekunden angelegt wird, kann galvanostatisch (konstant geregelter Strom) erfolgen. Alternativ kann diese Einstellung jedoch auch potentiostatisch (konstant geregelte Spannung) erfolgen, indem Stufe (1a) bei einem Abscheidungsstrom oder in einem Abscheidungsstrombereich durchgeführt wird, der einer entsprechenden Spannung in einem Bereich von 1 bis 50 V entspricht. Vorzugsweise liegt ein solcher Abscheidungsstrom in einem Bereich von 20 bis 400 mA, besonders bevorzugt in einem Bereich von 30 bis 300 mA oder in einem Bereich von 40 bis 250 mA oder in einem Bereich von 50 bis 220 mA, insbesondere in einem Bereich von 55 bis 200 mA. Vorzugsweise werden solche Abscheidungsstrome innerhalb der Stufe (1a) eingesetzt, wenn Substrate verwendet werden, welche eine Oberfläche im Bereich von 300 bis 500 cm², insbesondere von 350 bis 450 cm² oder 395 bis 405 cm² aufweisen.

Vorzugsweise beträgt die Abscheidungsstromdichte in Stufe (1a) mindestens 1 A/m², besonders bevorzugt mindestens 2 A/m² und insbesondere mindestens 3 A/m², vorzugsweise aber jeweils nicht mehr als 20 A/m², besonders bevorzugt jeweils nicht mehr als 10 A/m².

Vorzugsweise wird die Abscheidungsstromdichte oder der Abscheidungsstrom in Stufe (1a) dabei über eine Dauer von wenigstens 5 oder wenigstens 10 Sekunden, vorzugsweise von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. In einer anderen bevorzugten Ausführungsform wird die in Stufe (1a) angelegte Abscheidungsstromdichte oder der Abscheidungsstrom über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannung beziehungsweise der Abscheidungsstrom oder die Abscheidungsstromdichte kann dabei während der genannten Dauer konstant gehalten werden. Die Spannung beziehungsweise der Abscheidungsstrom oder die Abscheidungsstromdichte kann alternativ aber auch während der Abscheidungsdauer innerhalb von Stufe (1a) innerhalb der angegeben Minimum- und Maximalwerte im Bereich von 1 bis 50 V unterschiedliche Werte annehmen, beispielsweise hin und her pendeln oder rampen- oder stufenförmig von der Minimalzur Maximalabscheidungsspannung ansteigen.

Die Einstellung der Spannung beziehungsweise des Abscheidungsstroms oder der Abscheidungsstromdichte während der Durchführung von Stufe (1a) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Einstellung kann aber auch in Form einer Rampe erfolgen, also zumindest annähernd kontinuierlich und vorzugsweise linear über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist dabei möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Einstellung der Spannung beziehungsweise des Abscheidungsstroms oder der Abscheidungsstromdichte in Stufe (1a) kann auch in Form von Pulsen geregelt werden, mit Zeiten ohne Strom beziehungsweise mit einer Spannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1a) liegt. Rampen und Pulse können auch miteinander kombiniert werden.

Vorzugsweise wird das Komplexierungsmittel (A3aa) während der Durchführung von Stufe (1a) zumindest teilweise, insbesondere vollständig, wieder freigesetzt, da die von (A3aa) komplexierte Komponente (A3a) abgeschieden wird. Aufgrund der bevorzugten Anwesenheit der Komponente (A3b) in der Beschichtungszusammensetzung (A) kann das frei gesetzte Komplexierungsmittel (A3aa) dazu genutzt werden, die Komponente (A3b) zumindest teilweise in eine in (A) gelöste Form zu überführen, das heißt (A3aa) kann zur ständigen Generierung von (A3a) eingesetzt werden, um die Gegenwart eines entsprechenden Reservoirs an (A3a) zu gewährleisten.

### Stufe (1b)

Während der Durchführung von Stufe (1b) bildet sich auf der nach Stufe (1a) erhaltenen Vorabscheidungsschicht die eigentliche Tauchlackbeschichtung durch Abscheidung der Tauchlackkomponenten, insbesondere (A1) und (A2) und bevorzugt (A7). Auch diese Beschichtung enthält beispielsweise Bismut, welches in den bekannten Oxidationsstufen vorliegen kann. Das Bismut kann dabei in einem nachfolgenden Härtungsschritt beziehungsweise Vernetzungsschritt (6) des erfindungsgemäßen Verfahrens als Katalysator fungieren. Daher kann bei der Herstellung der Beschichtungszusammensetzung (A) vorzugsweise auf die Einarbeitung eines separaten Katalysators verzichtet werden.

Vorzugsweise wird Stufe (1b) bei einer angelegten Spannung in einem Bereich von 55 bis 400 V oder in einem Bereich von 75 bis 400 V oder in einem Bereich von 95 bis 400 V oder in einem Bereich von 115 bis 390 V oder in einem Bereich von 135 bis 370 V oder in einem Bereich von 155 bis 350 V oder in einem Bereich von 175 bis 330 V oder in einem Bereich von 195 bis 310 V oder in einem Bereich von 215 bis 290 V durchgeführt.

Vorzugsweise wird in Stufe (1b) in einem Zeitintervall im Bereich von 0 bis 300 Sekunden nach Beenden der Durchführung von Stufe (1a) eine Spannung im Bereich von 50 bis 400 V angelegt, vorzugsweise gegenüber einer inerten Gegenelektrode, jedoch unter der Bedingung, dass diese in Stufe (1b) angelegte Spannung um wenigstens 10 V größer ist als die zuvor in Stufe (1a) angelegte Spannung. Vorzugsweise wird diese Spannung innerhalb der Durchführung von Stufe (1b) für einen Zeitraum im Bereich von 10 bis 300 Sekunden, vorzugsweise im Bereich von 30 bis 240 Sekunden, bei wenigstens einem Wert innerhalb des genannten Spannungsbereichs von 50 bis 400 V unter der vorstehend genannten Bedingung gehalten.

Die in Stufe (1b) angelegte Spannung wird vorzugsweise über eine Dauer von wenigstens 10 Sekunden oder von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1b) aufrechterhalten wird.

In einer bevorzugten Ausführungsform wird die in Stufe (1b) angelegte Spannung über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannungserhöhung von Stufe (1a) zu Stufe (1b) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Spannungserhöhung kann aber auch in Form einer Rampe erfolgen, also zumindest annähernd kontinuierlich über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Angabe eines Zeitraums wie beispielsweise eines Zeitraums im Bereich von 10 bis 300 Sekunden für das Anlegen der Spannung in Stufe (1b) in einem Bereich von 50 bis 400 V kann bedeuten, dass diese während des genannten Zeitraums konstant gehalten wird. Die Spannung kann alternativ aber auch während der Abscheidungsdauer innerhalb von Stufe (1b) innerhalb der angegeben Minimum- und Maximalwerte im Bereich von 50 bis 400 V unterschiedliche Werte annehmen, beispielsweise hin und her pendeln oder rampen- oder stufenförmig von der Minimalzur Maximalabscheidungsspannung ansteigen.

Die Spannung, das heißt Abscheidungsspannung, in Stufe (1b) kann auch in Form von Pulsen geregelt werden, mit Zeiten ohne Strom beziehungsweise mit einer Abscheidungsspannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1b) liegt. Rampen und Pulse können auch miteinander kombiniert werden.

### Weitere optionale Verfahrensschritte

Gegebenenfalls umfasst das erfindungsgemäße Verfahren ferner einen Schritt (2), der vorzugsweise auf den Schritt (1) folgt, welcher wie vorstehend ausgeführt zwei Stufen (1a) und (1b) beinhaltet, nämlich
(2) ein Kontaktieren des mit der Beschichtungszusammensetzung (A) zumindest teilweise beschichteten Substrats mit einer wässrigen Sol-Gel-Zusammensetzung vor einer Aushärtung der abgeschiedenen Beschichtungszusammensetzung (A).

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird vorzugsweise eine wässrige Zusammensetzung verstanden, zu deren Herstellung wenigstens eine Ausgangsverbindung, welche wenigstens ein Metallatom und/oder Halbmetallatom wie beispielsweise M¹ und/oder M² und wenigstens zwei hydrolysierbare Gruppen wie beispielsweise zwei hydrolysierbare Gruppen X¹ aufweist, und welche gegebenenfalls ferner wenigstens einen nicht hydrolysierbaren organischen Rest wie beispielsweise R¹ aufweist, mit Wasser unter Hydrolyse und Kondensation umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden. Aufgrund der Gegenwart des nicht hydrolysierbaren organischen Restes wie beispielsweise R¹ kann eine solche erfindungsgemäß eingesetzte Sol-Gel-Zusammensetzung auch als "Sol-Gel-Hybrid-Zusammensetzung" bezeichnet werden.

Vorzugsweise ist die im optionalen Schritt (2) erfindungsgemäß eingesetzte wässrige Sol-Gel-Zusammensetzung erhältlich durch Umsetzung
wenigstens einer Verbindung Si(X¹)₃(R¹),
   wobei R¹ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,
   insbesondere wenigstens einer Verbindung Si(X¹)₃(R¹), wobei R¹ darin für einen nicht hydrolysierbaren organischen Rest steht, welcher wenigstens eine Epoxid-Gruppe als eine reaktive funktionelle Gruppe, aufweist, und worin X¹ für eine hydrolysierbare Gruppe wie beispielsweise eine O-C₁₋₆-Alkyl-Gruppe steht und zudem
   gegebenenfalls wenigstens einer weiteren Verbindung Si(X¹)₃(R¹), wobei R¹ darin für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, und worin X¹ für eine hydrolysierbare Gruppe wie beispielsweise eine O-C₁₋₆-Alkyl-Gruppe steht, aufweist,
und gegebenenfalls wenigstens einer Verbindung Si(X¹)₄, worin X¹ für eine hydrolysierbare Gruppe wie beispielsweise eine O-C₁₋₆-Alkyl-Gruppe steht,
und gegebenenfalls wenigstens einer Verbindung Si(X¹)₃(R¹),
   wobei R¹ darin für einen nicht hydrolysierbaren organischen Rest steht, welcher keine reaktive funktionelle Gruppe aufweist wie beispielsweise einen C₁₋₁₀-Alkylrest, und worin X¹ für eine hydrolysierbare Gruppe wie beispielsweise einer O-C₁₋₆-Alkyl-Gruppe steht,
und gegebenenfalls wenigstens einer Verbindung Zr(X¹)₄, worin X¹ für eine hydrolysierbare Gruppe wie beispielsweise einer O-C₁₋₆-Alkyl-Gruppe steht,
mit Wasser.

Vorzugsweise umfasst das erfindungsgemäße Verfahren ferner einen Schritt (3), der vorzugsweise auf die Schritte (1) und gegebenenfalls (2) folgt, nämlich eine
(3) Spülung des nach Schritt (1) oder Schritt (2) erhältlichen mit der wässrigen Beschichtungszusammensetzung (A) zumindest teilweise beschichteten Substrats mit Wasser und/oder mit Ultrafiltrat.

Der Begriff "Ultrafiltrat" beziehungsweise "Ultrafiltration" insbesondere im Zusammenhang mit der Elektrotauchlackierung ist dem Fachmann bekannt und beispielsweise definiert im Römpp Lexikon, Lacke und Druckfarben, Georg Thieme Verlag 1998.

Die Durchführung des Schritts (3) ermöglicht die Rückführung überschüssiger nach Schritt (1) auf dem zumindest teilweise beschichteten Substrat befindlicher Bestandteile der erfindungsgemäß eingesetzten wässrigen Beschichtungszusammensetzung (A) in das Tauchlackbad.

Das erfindungsgemäße Verfahren kann ferner einen optionalen Schritt (4), der vorzugsweise auf die Schritte (1), gegebenenfalls (2), bevorzugt (3) folgt, umfassen, nämlich einen Schritt (4)
(4) Kontaktieren des nach Schritt (1) oder Schritt (2) oder Schritt (3) erhältlichen mit der wässrigen Beschichtungszusammensetzung (A) zumindest teilweise beschichteten Substrats mit Wasser und/oder Ultrafiltrat, vorzugsweise über eine Dauer von 30 Sekunden bis zu einer Stunde, besonders bevorzugt über eine Dauer von 30 Sekunden bis zu 30 Minuten.

Das erfindungsgemäße Verfahren kann ferner einen optionalen Schritt (4a), der beispielsweise auf den Schritt (1), insbesondere Stufe (1b), oder (2) oder (3) oder (4) folgt, umfassen, nämlich einen Schritt (4a),
(4a) Kontaktieren des nach Schritt (1) oder Schritt (2) oder Schritt (3) oder Schritt (4) erhältlichen mit der wässrigen Beschichtungszusammensetzung (A) zumindest teilweise beschichteten Substrats mit einer wässrigen Lösung oder Dispersion, vorzugsweise einer wässrigen Lösung, wenigstens eines Vernetzungskatalysators (V), vorzugsweise wenigstens eines Vernetzungskatalysators (V), der zur Vernetzung der reaktiven funktionellen Gruppen des Bindemittels (A1), insbesondere eines als Bindemittel (A1) eingesetzten Acrylat-basierten polymeren Harzes und/oder Epoxid-basierten polymeren Harzes geeignet ist.

Vorzugsweise ist die wässrige Lösung des wenigstens einen Vernetzungskatalysators (V) eine wässrige Lösung einer Bismut-Verbindung wie beispielsweise eine wässrige Lösung enthaltend eine trivalentes Bismut aufweisende Verbindung. Vorzugsweise wird an das eingesetzte elektrisch leitfähige Substrat während der Durchführung des optionalen Schritts (4a) eine kathodische Spannung gegenüber einer Anode angelegt, besonders bevorzugt in einem Bereich von 4 V bis 100 V. Die Durchführung des Schritts (4a) ermöglicht eine effiziente Vernetzung für den Fall, das eine zu geringe Menge der Komponente (A3a) in der Beschichtungszusammensetzung nach Durchführung der Stufe (1a) des Schrittes (1) zurückbleibt, um in Stufe (1b) abgeschieden zu werden. Der optionale Schritt (4a), auch wenn grundsätzlich möglich, ist allerdings nicht bevorzugt, da ja gerade über die Komponente (A3), bevorzugt (A3a), ein Vernetzungskatalysator bereits vorhanden ist und somit der Vorteil besteht, auf die Zugabe eines separaten Vernetzungskatalysators verzichten zu können.

In einer bevorzugten Ausführungsform umfasst das erfindungsgemäße Verfahren ferner wenigstens einen Schritt (5), der vorzugsweise auf den Schritt (1) und/oder (2) und/oder (3) und/oder (4) und/oder (4a) folgt, aber vorzugsweise nach einem optionalen nachstehend beschriebenen Schritt (6) durchgeführt wird, nämlich das
(5) Aufbringen wenigstens einer weiteren Lackschicht auf das nach Schritt (1) und/oder (2) und/oder (3) und/oder (4) und/oder (4a) erhältliche mit der erfindungsgemäß eingesetzten wässrigen Beschichtungszusammensetzung (A) zumindest teilweise beschichtete Substrat.

Mittels des Schrittes (5) können ein oder mehrere weitere Lackschichten auf das nach Schritt (1) und/oder (2) und/oder (3) und/oder (4) und/oder (4a) erhältliche und mit der Beschichtungszusammensetzung (A) zumindest teilweise beschichtete Substrat aufgebracht werden. Sollen mehrere Schichten aufgebracht werden, kann Schritt (5) entsprechend oft wiederholt werden. Beispiele weiterer aufzubringender Lackschichten sind beispielsweise Basislackschichten, Füllerschichten und/oder ein- oder mehrschichtige Decklackschichten. Dabei kann die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist, und/oder nach Durchführung von Schritt (4) und/oder (4a) gehärtet werden, wobei bevorzugt diese Härtung wie nachfolgend beschrieben gemäß einem Schritt (6) erfolgt, bevor eine weitere Schicht wie eine Basislackschicht, Füllerschicht und/oder eine ein- oder mehrschichtige Decklackschicht aufgebracht wird. Alternativ kann aber die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist und/oder nach Durchführung von Schritt (4) und/oder (4a), nicht gehärtet werden, sondern zunächst eine weitere Schicht wie eine Basislackschicht, Füllerschicht und/oder eine ein- oder mehrschichtige Decklackschicht aufgebracht werden ("Nass-in-Nass-Verfahren"). Nach Aufbringen dieser weiteren Schicht(en) wird in diesem Fall das so erhaltene Gesamtsystem gehärtet, wobei diese Härtung wie nachfolgend beschrieben vorzugsweise gemäß einem Schritt (6) erfolgen kann.

In einer bevorzugten Ausführungsform umfasst das erfindungsgemäße Verfahren ferner wenigstens einen Schritt (6), nämlich eine
(6) Aushärtung der nach Schritt (1) und/oder gegebenenfalls (2) und/oder (3) und/oder (4) und/oder (4a) zumindest teilweise auf dem Substrat aufgebrachten wässrigen Beschichtungszusammensetzung (A) oder der nach Schritt (1) und/oder gegebenenfalls (2) und/oder (3) und/oder (4) und/oder (4a) und/oder (5) zumindest teilweise auf dem Substrat aufgebrachten Beschichtung.

Schritt (6) des erfindungsgemäßen Verfahrens wird vorzugsweise mittels Einbrennen nach Schritt (1) oder gegebenenfalls (2) oder gegebenenfalls erst nach wenigstens einem weiteren Schritt (5) durchgeführt. Schritt (6) erfolgt vorzugsweise in einem Ofen. Die Aushärtung erfolgt dabei vorzugsweise bei einer Substrattemperatur im Bereich von 140°C bis 200°C, besonders bevorzugt in einem Bereich von 150°C bis 190°C, ganz besonders bevorzugt in einem Bereich von 160°C bis 180°C. Schritt (6) erfolgt vorzugsweise über eine Dauer von wenigstens 2 Minuten bis 2 Stunden, besonders bevorzugt über eine Dauer von wenigstens 5 Minuten bis 1 Stunde, ganz besonders bevorzugt über eine Dauer von wenigstens 10 Minuten bis 30 Minuten.

### Zumindest teilweise beschichtetes Substrat

Ein weiterer Gegenstand der vorliegenden Erfindung ist ein zumindest teilweise mit der erfindungsgemäßen wässrigen Beschichtungszusammensetzung (A) beschichtetes elektrisch leitfähiges Substrat oder ein zumindest teilweise beschichtetes elektrisch leitfähiges Substrat, welches mittels des erfindungsgemäßen Verfahrens zur zumindest teilweisen Beschichtung eines elektrisch leitfähigen Substrats mit einer erfindungsgemäßen Beschichtungszusammensetzung, bevorzugt also einem Elektrotauchlack, erhältlich ist.

Ein weiterer Gegenstand der vorliegenden Erfindung ist ein aus wenigstens einem solchen Substrat hergestellter vorzugsweise metallischer Gegenstand oder hergestelltes vorzugsweise metallisches Bauteil.

Solche Gegenstände können beispielsweise Metallbänder sein. Solche Bauteilen können aber auch und im Rahmen der vorliegenden Erfindung bevorzugt Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

Die vorliegende Erfindung wird in der Folge anhand einiger Beispiele beschrieben.

### Bestimmungsmethoden

### 1. Salzsprühnebelprüfung gemäß DIN EN ISO 9227 NSS

Die Salzsprühnebelprüfung dient der Ermittlung der Korrosionsbeständigkeit einer Beschichtung auf einem Substrat. Die Salzsprühnebelprüfung wird gemäß DIN EN ISO 9227 NSS (Datum: Juni 2017) für entsprechende beschichtete elektrisch leitfähige Substrate, nämlich kaltgewalzter Stahl (CRS), durchgeführt. Die zu untersuchenden Proben werden dabei in einer Kammer, in der bei einer Temperatur von 35 °C kontinuierlich über eine Dauer von 1008 Stunden eine 5%ige Kochsalzlösung mit kontrolliertem pH-Wert im Bereich von 6,5 bis 7,2 vernebelt wird. Der Nebel schlägt sich auf die zu untersuchenden Proben nieder und überzieht diese mit einem korrosiv wirkenden Salzwasserfilm.

Die Beschichtungen der zu untersuchenden Proben werden vor der Salzsprühnebelprüfung gemäß DIN EN ISO 9227 NSS mit einem Messerschnitt bis zum Substrat eingeritzt, so können die Proben hinsichtlich ihres Unterwanderungsgrades gemäß DIN EN ISO 4628-8 (Datum 1.3.2013) untersucht werden, da das Substrat während der Salzsprühnebelprüfung gemäß DIN EN ISO 9227 NSS entlang der Ritzlinie korrodiert. Durch den fortschreitenden Korrosionsvorgang wird die Beschichtung während der Prüfung mehr oder weniger stark unterwandert. Der Unterwanderungsgrad (die Unterwanderung) in [mm] ist ein Maß für die Beständigkeit der Beschichtung gegen Korrosion. Der weiter unten in den Ergebnissen genannte mittlere Unterwanderungsgrad stellt sich als Mittelwert der Einzelwerte von drei bis fünf verschiedenen beurteilten Blechen dar, wobei jeder Einzelwert eines Blechs wiederum ein Mittelwert der Unterwanderungsgrade an 11 Messpunkten auf dem Blech ist.

### 2. VDA-Klimawechseltest nach VDA DIN EN ISO 11997-1 (Jan 2018, Zyklus B)

Dieser Klimawechseltest dient der Ermittlung der Korrosionsbeständigkeit einer Beschichtung auf einem Substrat. Der Klimawechseltest wird für das entsprechend beschichtete Substrat, nämlich kaltgewalzter Stahl (CRS), durchgeführt. Der Klimawechseltest wird dabei in 10 sogenannten Zyklen durchgeführt. Ein Zyklus besteht dabei aus insgesamt 168 Stunden (1 Woche) und umfasst
a) 24 Stunden einer Salzsprühnebelprüfung gemäß DIN EN ISO 9227 NSS (Datum: 1.9.2012),
b) gefolgt von 8 Stunden einer Lagerung einschließlich Anwärmen gemäß DIN EN ISO 6270-2 vom September 2005, Verfahren AHT,
c) gefolgt von 16 Stunden einer Lagerung einschließlich Abkühlen gemäß DIN EN ISO 6270-2 vom September 2005, Verfahren AHT,
d) 3-fache Wiederholung von b) und c) (insgesamt also 72 Stunden), und
e) 48 Stunden einer Lagerung einschließlich Abkühlen bei belüfteter Klimakammer gemäß DIN EN ISO 6270-2 vom September 2005, Verfahren AHT.

Die jeweilige Beschichtung der zu untersuchenden Proben wird vor der Durchführung des Klimawechseltests mit einem Messerschnitt bis zum Substrat eingeritzt, sodass die Proben hinsichtlich ihres Unterwanderungsgrades gemäß DIN EN ISO 4628-8 (Datum 1.3.2013) untersucht werden können, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung gegen Korrosion. Der weiter unten in den Ergebnissen genannte mittlere Unterwanderungsgrad stellt sich als Mittelwert der Einzelwerte von drei bis fünf verschiedenen beurteilten Blechen dar, wobei jeder Einzelwert eines Blechs wiederum ein Mittelwert der Unterwanderungsgrade an 11 Messpunkten auf dem Blech ist.

### 3. Klimawechseltest PV 1210

Dieser Klimawechseltest PV 1210 dient der Ermittlung der Korrosionsbeständigkeit einer Beschichtung auf einem Substrat. Der Klimawechseltest wird für entsprechende beschichtete elektrisch leitfähige Substrate aus tauchverzinktem Stahl (HDG) durchgeführt. Der Klimawechseltest wird dabei in 30 sogenannten Zyklen durchgeführt. Ein Zyklus (24 Stunden) besteht dabei aus 4 Stunden einer Salzsprühnebelprüfung gemäß DIN EN ISO 9227 NSS (Juni 2017), 4 Stunden einer Lagerung einschließlich Abkühlen gemäß DIN EN ISO 6270-2 vom September 2005 (Verfahren AHT) und 16 Stunden einer Lagerung einschließlich Anwärmen gemäß DIN EN ISO 6270-2 vom September 2005, Verfahren AHT bei 40±3°C und einer Luftfeuchtigkeit von 100%. Nach 5 Zyklen erfolgt jeweils eine Ruhepause von 48 Stunden einschließlich Abkühlen gemäß DIN EN ISO 6270-2 vom September 2005, Verfahren AHT. 30 Zyklen entsprechen somit einer Dauer von insgesamt 42 Tagen.

Die Beschichtung der zu untersuchenden Proben wird vor der Durchführung des Klimawechseltests mit einem Messerschnitt bis zum Substrat eingeritzt, so können die Proben hinsichtlich ihres Unterwanderungsgrades gemäß DIN EN ISO 4628-8 (Datum 1.3.2013) untersucht werden, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung gegen Korrosion. Der weiter unten in den Ergebnissen genannte mittlere Unterwanderungsgrad stellt sich als Mittelwert der Einzelwerte von drei bis fünf verschiedenen beurteilten Blechen dar, wobei jeder Einzelwert eines Blechs wiederum ein Mittelwert der Unterwanderungsgrade an 11 Messpunkten auf dem Blech ist.

### 4. Kupferbeschleunigte Essigsäure-Salzsprühnebelprüfung gemäß DIN EN ISO 9227 CASS

Auch die kupferbeschleunigte Essigsäure-Salzsprühnebelprüfung dient der Ermittlung der Korrosionsbeständigkeit einer Beschichtung auf einem Substrat. Die kupferbeschleunigte Essigsäure-Salzsprühnebelprüfung wird gemäß DIN EN ISO 9227 CASS für entsprechend beschichtete, elektrisch leitfähige Substrate aus Aluminium (AA6014 (ALU)) durchgeführt. Die zu untersuchenden Proben werden dabei in einer Kammer, in der bei einer Temperatur von 50 °C kontinuierlich über eine Dauer von 240 Stunden eine 5%ige Kochsalzlösung mit kontrolliertem pH-Wert vernebelt wird, wobei der Salzlösung Kupferchlorid und Essigsäure zugegeben wird. Der Nebel schlägt sich auf den zu untersuchenden Proben nieder und überzieht diese mit einem korrosiv wirkenden Salzwasserfilm.

Die Beschichtung der zu untersuchenden Proben wird vor der kupferbeschleunigten Essigsäure-Salzsprühnebelprüfung gemäß DIN EN ISO 9227 CASS mit einem Messerschnitt bis zum Substrat eingeritzt, sodass die Proben hinsichtlich ihres Unterwanderungsgrades gemäß DIN EN ISO 4628-8 untersucht werden können, da das Substrat während der kupferbeschleunigten Essigsäure-Salzsprühnebelprüfung gemäß DIN EN ISO 9227 CASS entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung gegen Korrosion. Der weiter unten in den Ergebnissen genannte mittlere Unterwanderungsgrad stellt sich als Mittelwert der Einzelwerte von drei bis fünf verschiedenen beurteilten Blechen dar, wobei jeder Einzelwert eines Blechs wiederum ein Mittelwert der Unterwanderungsgrade an 11 Messpunkten auf dem Blech ist.

Neben dem Unterwanderungsgrad wird zudem die Anzahl an Enthaftungsstellen auf der Gesamtfläche des Blechs angegeben (das heißt also Keimpunkte, an denen ein Ablösen der Beschichtung stattgefunden hat). Auch diese Anzahl wird als Mittelwert der Einzelanzahlen von drei bis fünf Einzelblechen angegeben.

### 5. Atomemissionsspektrometrie (ICP-OES) zur Bestimmung der Mengen an (A3a), (A3b), (A4), (A5), (A6) wie insbesondere (A6a)

Der Gehalt an bestimmten Elementen einer zu untersuchenden Probe wie beispielsweise der Gehalt an Bismut wird mittels induktiv-gekoppelter Plasma-Atom-Emissionspektrometrie (ICP-OES) gemäß DIN EN ISO 11885 (Datum: 1.9.2009) ermittelt.

Zu unterscheiden ist dabei grundsätzlich zwischen Komponenten, die in einer in der Beschichtungszusammensetzung (A) gelösten Form vorliegen (beispielsweise (A3a)) und solchen, die in einer in (A) ungelösten Form vorliegen (beispielsweise (A3b)). Der Gesamtanteil eines Elements, beispielsweise Bismut, an der Beschichtungszusammensetzung (A) ergibt sich dann aus der Summe aus in gelöst vorliegender Form und in ungelöst vorliegender Form vorhandenem Element.

Die in gelöst vorliegender Form vorliegenden Elemente werden wie folgt aus Ultrafiltrat bestimmt. Dabei wird von einer Beschichtungszusammensetzung (A) bei einer Temperatur von 20°C eine Ultrafiltration für die Dauer von sechs Stunden durchgeführt (Ultrafiltration im Kreislauf; Membran der Ultrafiltration: Nadir, PVDF, RM-UV 150T). Aus dem Permeat beziehungsweise Ultrafiltrat wird eine Probe entnommen. Diese wird in einem durch ein Hochfrequenzfeld erzeugtes Argonplasma thermisch angeregt und das aufgrund von Elektronenübergängen emittierte Licht als Spektrallinie der entsprechenden Wellenlänge sichtbar und mit einem optischen System analysiert. Dabei besteht eine lineare Beziehung zwischen der Intensität des emittierten Lichtes und der Konzentration des entsprechenden Elements. Vor Durchführung werden anhand von bekannten Elementstandards (Referenzstandards), die in Abhängigkeit von der jeweiligen zu untersuchenden Probe Kalibrierungsmessungen durchgeführt. Anhand dieser Kalibrierungen können Konzentrationen unbekannter Lösungen wie die Konzentration der Menge an (A3a) oder (A4) im Ultrafiltrat bestimmt werden. Dabei wird angenommen, dass die in (A) in gelöster Form vorliegende Komponenten vollständig ins Ultrafiltrat übergehen.

Mittels der oben beschriebenen Bestimmungsmethode kann zudem der Gesamtanteil der Elemente an der Beschichtungszusammensetzung (A) bestimmt werden. Zur Probenvorbereitung wird dabei wird eine Probe der Beschichtungszusammensetzung (A) entnommen und ein Mikrowellenaufschluss dieser Probe durchgeführt, um eine der ICP-OES-Untersuchung zugängliche Probenlösung zu erhalten: Hierbei wird eine Probe der Beschichtungszusammensetzung (A) (oder auch einer Vergleichszusammensetzung) eingewogen und die flüchtigen Bestandteile dieser Probe durch Erhitzen bei einer linearen Temperaturerhöhung von 18°C auf 130°C innerhalb einer Stunde entfernt. Zu einer Menge von bis zu 0,5 g dieser so erhaltenen Probe wird eine 1:1-Mischung aus Salpetersäure (65%ig) und Schwefelsäure (96%ig) gegebenen (jeweils 5 mL von jeder der genannten Säuren) und dann ein Mikrowellenaufschluss mit einem Gerät der Firma Berghof (Gerät Speedwave IV) durchgeführt. Während des Aufschlusses wird die Probenmischung innerhalb von 20 bis 30 Minuten auf einer Temperatur von 250°C erhitzt und diese Temperatur für 10 Minuten gehalten. Nach dem Aufschluss soll die verbleibende Probenmischung eine klare Lösung ohne Festkörperanteil sein. Mittels ICP-OES gemäß DIN EN ISO 11885 können dann die Gesamtgehalte der jeweiligen Elemente an der Probe bestimmt werden.

Wird von diesem Gesamtanteil der in gelöst vorliegender Form vorliegende Anteil subtrahiert, der wie vorstehend erläutert, ermittelt wird, so ergibt sich der Anteil an vorhandener Komponente, der in ungelöst vorliegender Form vorliegt.

Selbstverständlich ist in dem Fall, dass die Mengen der eingesetzten Bestandteile, die das zu quantifizierende Element enthalten, unmittelbar bekannt sind, auch eine rechnerische Ermittlung des Gesamtgehalts möglich.

### 6. Überprüfung der Oberflächenstruktur von hergestellten Beschichtungen

Die Überprüfung der Oberflächenstruktur beziehungsweise Oberflächengüte erfolgte visuell. Dabei wurden die auf Substraten angeordneten Beschichtungen fachmännisch visuell hinsichtlich der Homogenität der Beschichtung begutachtet. Eine glatte, nur geringfügige oder keine Unregelmäßigkeiten aufweisende Oberfläche wurde mit der Note 1 beurteilt. Eine leichte bis mittlere Unregelmäßigkeit, die ggf. auch Stippen in begrenztem Umfang aufweist, wird mit der Note 3 bewertet. Deutlichere Unregelmäßigkeiten, die ein nicht mehr akzeptables Niveau aufweisen, werden mit der Note 5 bewertet.

### 7. Dynamisch-mechanische Analyse (DMA)

Mittels der DMA Analyse wurden für entsprechende Beschichtungszusammensetzungen (A) die "Onset-Temperatur" (Temperatur, bei der die Vernetzung beginnt) und die Offset-Zeiten (Zeit bis zum Vernetzungsende) ermittelt. Dabei wird sich zu Nutze gemacht, dass sich die dynamisch-mechanischen (genauer viskoelastischen) Eigenschaften der Proben bei makroskopischer Vernetzung entsprechend verändern. Konkret wurden die oben genannten Kenngrößen anhand der Veränderung des Verlustfaktors tan δ und/oder des Speichermoduls E' abgeleitet.

Die Beschichtungszusammensetzungen wurden auf Kohlefasernetzen (CW245) aufgebracht. Daraus wurden Probenstreifen herausgeschnitten und mit einer freien Fläche von 10 mm x 20 mm eingespannt. Die DMA Messungen wurden im Modus "Tensile Mode - Tension off" durchgeführt (Messbedingungen: Amplitude 0,006 mm, Frequenz 1 Hz; Onset-Temperatur: 2 °C/min von Raumtemperatur bis 110 °C, 1 °C/min von 110 °C bis 200 °C / Offset-Zeiten: (a) 22 °C/min von 25 °C bis 135 °C, 5 °C/min von 135 °C bis 160 °C, 60 min Isothermal 160 °C (b) 25 °C/min von 25 °C bis 150 °C, 5 °C/min von 150 °C bis 175 °C, 60 min Isothermal 175 °C (c) 28 °C/min von 25 °C bis 165 °C, 5 °C/min von 165 °C bis 190 °C, 60 min Isothermal 190 °C).

Die Auswertung erfolgte wie folgt: Onset-Temperatur: Extrapolierte Onset-Temperaturlage des Netzwerkaufbaus aus tan δ-Verlauf. Offset-Zeit: Extrapolierte Offset-Zeit [min] des Netzwerkaufbaus aus E'-Verlauf in linearer Auftragung.

### 8. Glasübergangstemperatur

Zudem wurde die Glasübergangstemperatur von auf Substraten hergestellten Beschichtungen mittels (MDSC TA Instruments Q2000; von 0 °C - 160 °C, Modulation 1 °C, 60 s, 3°C/min, Spülgas: Stickstoff 50 ml/min; Auswertung: Glasübergangstemperatur [°C] aus dem Midpoint der rev. HF Kurve.) untersucht. Die Glasübergangstemperatur eines bei bestimmten Bedingungen gehärteten Beschichtungsfilms ermöglicht eine Aussage über die Vernetzungsdichte und damit Qualität der Vernetzung des Beschichtungsfilms.

Die nachfolgenden Beispiele dienen der Erläuterung der Erfindung, sind jedoch nicht einschränkend auszulegen.

Sofern nicht anders angeführt, handelt es sich bei den nachfolgenden Angaben in Prozenten jeweils um Gewichtsprozente.

### Beispiele und Vergleichsbeispiele

### 1a. Herstellung von erfindungsgemäßen wässrigen Beschichtungszusammensetzungen sowie einer Vergleichsbeschichtungszusammensetzung

Die zur Herstellung der nachfolgenden beispielhaften erfindungsgemäßen Beschichtungszusammensetzungen beziehungsweise der Vergleichsbeschichtungszusammensetzung V1 eingesetzte Pigmentpaste CathoGuard^{®} 800 der Firma BASF enthält Bismut-Subnitrat. Die Herstellung solcher Pigmentpasten ist dem Fachmann beispielsweise aus DE 10 2008 016 220 A1 bekannt (Seite 7, Tabelle 1, Variante B).

### Vergleichsbeschichtungszusammensetzung (A)V1

2129 g einer wässrigen Dispersion eines Bindemittels und eines Vernetzungsmittels (kommerziell erhältliches Produkt CathoGuard^{®} 800 der Firma BASF mit einem Festkörpergehalt von 38,0 Gew.-%), 302 g einer Pigmentpaste (kommerziell erhältliches Produkt CathoGuard^{®} 800 der Firma BASF mit einem Festkörpergehalt von 65,5 Gew.-%), 1258 g Wasser, 1309,5 g einer Lösung von Bicin (N,N'-Bis((2-Hydroxyethyl)glycin) in Wasser (59,5 g Bicin + 1250 g Wasser) wurden zu einer Vergleichsbeschichtungszusammensetzung (A)V1 zusammengegeben. Dabei wurde die Bicin-Lösung zunächst hergestellt und anschließend zur Vorlage, die das Bindemittel und die Paste enthält, gegeben. Das Gemisch wurde bei 18-23°C für 24 Stunden gerührt.

### Beschichtungszusammensetzung (A)E1

Die Beschichtungszusammensetzung (A)E1 wurde analog (A)V1 hergestellt, wobei allerdings zusätzlich 250 g einer Lösung von Lithiumacetatdihydrat in Wasser (7,2 g Lithiumacetatdihydrat in 892,8 g Wasser, von dieser Lösung dann 250 g) hinzugemischt wurden und die Menge an hinzugegebenem Wasser entsprechend um 250 g verringert wurde. Der Anteil an Lithium (A4) in (A)E1 entsprach damit einem Anteil von 27 ppm, bezogen auf die Gesamtmenge von (A)E1.

### Beschichtungszusammensetzung (A)E2

Die Beschichtungszusammensetzung (A)E2 wurde analog (A)E1 hergestellt, wobei allerdings zusätzlich 250 g einer Lösung von Kupfer(II)nitrattrihydrat in Wasser (7,6 g Kupfer(II)nitrattrihydrat + 992,4 g Wasser, davon dann 250 g) hinzugemischt wurden und die Menge an hinzugegebenem Wasser entsprechend um 250 g verringert wurde. Der Anteil an Kupfer (A6a) in (A)E2 entsprach damit einem Anteil von 100 ppm, bezogen auf die Gesamtmenge von (A)E2.

Für alle drei genannten Beschichtungszusammensetzungen wurden die Mengen an gelösten Lithium (A4), die Menge an gelösten Phosphor (A5) (zur Kontrolle), die Menge an gelöstem Kupfer und die Mengen an Bismut (A3a) und (A3b) bestimmt. Tabelle 1a gibt einen Überblick über die so erhaltenen erfindungsgemäßen Beschichtungszusammensetzungen (A)E1 und (A)E2 sowie die Vergleichsbeschichtungszusammensetzung (A)V1. Weiterhin sind gegebenenfalls der pH-Wert und die Leifähigkeit angegeben. Die jeweiligen pH-Werte und Leitfähigkeiten in der Tabelle 1a werden jeweils bei einer Temperatur im Bereich von 20°C ermittelt, sofern sie bestimmt worden sind.

**Tabelle 1a**

| | (A)V1 | (A)E1 | (A)E2 |
|---|---|---|---|
| Anteil (A3a)* | 980 ppm | 980 ppm | 980 ppm |
| Anteil (A3b)* | 1520 ppm | 1520 ppm | 1520 ppm |
| Anteil (A4) | - | 27 ppm | 27 ppm |
| Anteil (A5) | - | - | - |
| Anteil (A6a) | - | - | 100 ppm |
| pH-Wert | 5,44 | 5,58 | 5,47 |
| Leitfähigkeit | 2,03 mS/cm | 2,26 mS/cm | 2,26 mS/cm |

| | | | |
|---|---|---|---|
| * Mengen exemplarisch für (A)E2 bestimmt, für (A)V1 und (A)E1 wurden die exakt selben Mengen und Anteile der Bismut-haltigen Komponenten eingesetzt. 1b. Herstellung weiterer Beschichtungszusammensetzungen mit variierendem Anteil an Lithium (A4). | | | |

Weitere Beschichtungszusammensetzungen wurden analog (A)E2 hergestellt, wobei allerdings der Anteil an Lithium (A4) variiert wurde. Dazu wurde die oben genannte Lösung von Lithiumacetatdihydrat in Wasser (7,2 g Lithiumacetatdihydrat in 892,8 g Wasser) in entsprechend unterschiedlichen Mengen hinzugemischt. Über Variation des Anteils an hinzugegebenem Wasser wurde die Gesamtmenge an hergestellter Probe wiederum konstant gehalten.

Tabelle 1b gibt einen Überblick über die hergestellten Beschichtungszusammensetzungen. Zur besseren Vergleichbarkeit ist zudem die Beschichtungszusammensetzung (A)E1 gezeigt.

**Tabelle 1b**

| | (A)E2 | (A)E1 | (A)E3 | (A)E4 | (A)E5 | (A)V2 |
|---|---|---|---|---|---|---|
| Anteil (A4) | 17 ppm | 21 ppm | 27 ppm | 38 ppm | 49 ppm | 350 ppm |
| pH-Wert | 5,24 | 5,34 | 5,58 | 5,60 | 5,58 | 5,96 |
| Leitfähigkeit [mS/cm] | 2,47 | 2,47 | 2,26 | 2,40 | 2,58 | 4,55 |

### 1c. Herstellung weiterer Beschichtungszusammensetzungen mit variierendem Anteil an Lithium und Phosphor

Weitere Beschichtungszusammensetzungen wurden analog (A)E1 hergestellt, wobei allerdings anstelle einer Lösung von Lithiumacetatdihydrat in Wasser Lithiumphosphat eingesetzt wurde. Das Lithiumphosphat wurde dabei als Bestandteil der Pigmentpaste eingemahlen. Tabelle 1c gibt einen Überblick über diese Beschichtungszusammensetzungen. Zur besseren Vergleichbarkeit ist zudem die Beschichtungszusammensetzung (A)E1 gezeigt.

**Tabelle 1c**

| | (A)E1 | (A)E6 | (A)E7 | (A)E8 | (A)E9 |
|---|---|---|---|---|---|
| Anteil Lithiumphosphat | - | 100 ppm | 150 ppm | 250 ppm | 350 ppm |
| Anteil (A4) | 27 ppm | 27 ppm | 27 ppm | n.b. | n.b. |
| Anteil (A5) | - | 27 ppm | 40 ppm | 67 ppm | 93,5 ppm |
| pH-Wert | 5,58 | 5,31 | 5,24 | 5,50 | 5,60 |
| Leitfähigkeit [mS/cm] | 2,26 | 2,34 | 2,29 | 2,32 | 2,45 |

| | | | | | |
|---|---|---|---|---|---|
| n.b. = nicht bestimmt | | | | | |

### 2. Herstellung von beschichteten elektrisch leitfähigen Substraten mittels einer der Beschichtungszusammensetzungen (A)

Die unter 1. beschriebenen wässrigen Beschichtungszusammensetzungen wurden jeweils als Tauchlackbeschichtungen auf unterschiedliche Substrate appliziert. Dabei wird jede der Zusammensetzungen direkt nach ihrer vorstehend beschriebenen Herstellung auf die unterschiedlichen Substrate appliziert.

Es werden drei Arten von Testblechen verwendet, nämlich T1 (tauchverzinkter Stahl (HDG)) und T2 (Aluminium (ALU)) sowie T3 (kaltgewalzter Stahl (CRS)).

Diese werden zunächst jeweils durch Eintauchen der Bleche in ein Bad enthaltend eine wässrige Lösung enthaltend das kommerziell erhältliche Produkt Gardoclean S5160 der Firma Chemetall sowie Wasser (97,7 Gew.-%) über eine Dauer von 2 Minuten bei einer Temperatur von 60 °C gereinigt.

Die auf diese Weise gereinigten Substrate werden im Anschluss mit Wasser gespült.

Im direkten Anschluss wird auf jedes Blech T1, T2 beziehungsweise T3 eine der erfindungsgemäß eingesetzten wässrigen Beschichtungszusammensetzungen appliziert, indem das jeweilige Blech jeweils in ein entsprechendes eine der Zusammensetzungen enthaltendes Tauchlackbad getaucht wird. Dabei weist das Tauchlackbad jeweils eine Badtemperatur von 30°C auf.

Die Beschichtung im Tauchlackbad wird dabei mittels eines zweistufigen Abscheidungsschritts beziehungsweise Beschichtungsschritts durchgeführt, der zwei Stufen (1a) und (1b) vorsieht, bei welchem zunächst galvanostatisch Stromstärken im Bereich von 0,02 bis 0,32 A oder potentiostatisch eine Spannung von 4 V jeweils über eine Dauer von 120 Sekunden angelegt werden (entsprechend Stufe (1a)).

Im Anschluss daran wird für die nach Stufe (1a) erhaltenen Substrate Stufe (1b) des Schritts (1) des erfindungsgemäßen Verfahrens durchgeführt, wobei entweder potentiostatisch eine Spannung von 4 V oder galvanostatisch Stromstärken im Bereich von 0,12 bis 0,28 A angelegt werden, welche jeweils innerhalb von Stufe (1b) kontinuierlich linear auf eine Spannung im Bereich von 200-220 V jeweils über eine Dauer von jeweils 30 Sekunden mittels einer Spannungsrampe erhöht wird. Diese jeweilige Spannung wird dann solange für eine Dauer von 90 Sekunden (Haltezeit) gehalten, so dass (nach der dann folgenden Härtung) eine Beschichtung des jeweiligen Substrats in einer Trockenschichtdicke von 17 bis 22 Mikrometern erzielt wird. Anschließend werden die Testtafeln für 25 min in einem Ofen (sofern nicht explizit anders angegeben 175 °C) gehärtet.

### 3. Untersuchung der Korrosionsschutzwirkung der beschichteten Substrate

Es werden die mit einer der Beschichtungszusammensetzungen beschichteten Substrate mittels der weiter oben beschriebenen Messmethoden untersucht.

### 3a Untersuchung von Beschichtungen, die mittels der in Tabelle 1a aufgeführten Beschichtungszusammensetzungen hergestellt wurden.

Die Beschichtungen, die mittels der in Tabelle 1a aufgeführten Beschichtungszusammensetzungen hergestellt wurden, wurden hinsichtlich ihrer Korrosionsbeständigkeit untersucht. Hinzuweisen ist darauf, dass bei mittleren Unterwanderungen von um etwa 1 mm eine hervorragende Beständigkeit erreicht ist. Zudem sind Unterschiede im absoluten Bereich um etwa 1 mm messtechnisch schwierig auswertbar und demnach nicht aussagekräftig. Tabelle 3a zeigt die Ergebnisse.

**Tabelle 3a**

| Beschichtungszusammensetzung | (A)V1 | (A)E1 | (A)E2 |
|---|---|---|---|
| Beschichtung | B(A)V1 | B(A)E1 | B(A)E2 |
| Mittlere Unterwanderung NSS (Substrat CRS) [mm] | 4,2 | 3,7 | 2,9 |
| Mittlere Unterwanderung VDA (Substrat CRS) [mm] | 5,7 | 4,9 | 3,9 |
| Mittlere Unterwanderung PV1210 (Substrat HDG) [mm] | 6,7 | 6,8 | 5,5 |
| Mittlere Unterwanderung CASS (Substrat ALU) [mm] | 0,8 | 1,2 | 0,4 |
| Anzahl Enthaftung NSS (Substrat ALU) | 124,8 | 3,2 | 3,8 |

Die Ergebnisse zeigen, dass das System B(A)E1 im Vergleich zum System B(A)V1 auf Stahlsubstraten eine leicht verbesserte Korrosionsbeständigkeit aufweist. Während die Unterwanderungseigenschaften auf Aluminium bei sowohl B(A)E1 und B(A)V1 sehr gut sind, zeigt sich bei B(A)V1 eine extrem hohe Anzahl von Enthaftungsstellen auf dem Blech, gleichbedeutend damit, dass viele Keime für einen weiteren Korrosionsangriff bestehen. Im Gegensatz dazu zeigt das System B(A)E1 nur eine extrem kleine Anzahl solcher Enthaftungsstellen. Das erfindungsgemäße System B(A)E2 ist in Bezug auf die korrosionsinhibierenden Eigenschaften nochmals verbessert.

In Summe zeigt sich, dass die erfindungsgemäßen System optimal geeignet sind, um in Bezug auf beide gängigen Metalltypen "Stahl" und "Aluminium" einen hervorragenden Korrosionsschutz zu bieten, demnach also optimal für Substrate geeignet sind, bei denen beide Metalltypen vorhanden sind.

### 3b Untersuchung von Beschichtungen, die mittels der in Tabelle 1b aufgeführten Beschichtungszusammensetzungen hergestellt wurden.

Die Beschichtungen, die mittels der in Tabelle 1b aufgeführten Beschichtungszusammensetzungen hergestellt wurden, wurden hinsichtlich ihrer Oberflächenstruktur / Oberflächengüte untersucht. Tabelle 3b zeigt die Ergebnisse.

Die Beschichtungszusammensetzung (A)V2 ließ sich zwar über das Verfahren der elektrophoretischen Tauchlackierung abscheiden. Jedoch resultierte eine löchrige und gestörte Oberfläche, die nicht akzeptabel war.

**Tabelle 3b**

| Beschichtungszusammensetzung | (A)E2 | (A)E1 | (A)E3 | (A)E4 | (A)E5 | (A)V2 |
|---|---|---|---|---|---|---|
| Beschichtung | B(A)E2 | B(A)E1 | B(A)E3 | B(A)E4 | B(A)E5 | B(A)E6 |
| Anteil (A4) | 17 ppm | 21 ppm | 27 ppm | 38 ppm | 49 ppm | 350 ppm |
| Oberflächengüte | 1 | 1-2 | 1-2 | 2-3 | 3-4 | 5 |

Weiterhin wurde die Oberflächengüte der Beschichtung B(A)V1 untersucht und mit der Note 1 bewertet.

Im Übrigen wurden repräsentativ einige der unter 3a beschriebenen Untersuchungen hinsichtlich der Korrosionsbeständigkeit auch für die Beschichtungen B(A)E2, B(A)E3, B(A)E4 und B(A)E5 durchgeführt. Die Ergebnisse zeigten, dass die jeweilige Korrosionsbeständigkeit im Bereich der Beschichtung B(A)E1 liegt und damit besser ist als die Korrosionsbeständigkeit der Beschichtung B(A)V1.

In Summe zeigen die Ergebnisse, dass das Hinzufügen von Lithium (A4) zu den Beschichtungszusammensetzungen einerseits zu einer signifikant verbesserten Korrosionsbeständigkeit führt. Andererseits führt eine Erhöhung des Anteils (A4) zu einer verminderten Oberflächenqualität. Bei einem Anteil an (A4) von 388 ppm konnte nicht einmal mehr eine elektrophoretische Abscheidung durchgeführt werden.

### 3c Untersuchung von Beschichtungen, die mittels der in Tabelle 1c aufgeführten Beschichtungszusammensetzungen hergestellt wurden.

Die Beschichtungen, die mittels der in Tabelle 1c aufgeführten Beschichtungszusammensetzungen hergestellt wurden, wurden hinsichtlich ihrer Vernetzungseigenschaften untersucht. Tabelle 3c zeigt die Ergebnisse.

**Tabelle 3c**

| | (A)E1 | (A)E6 | (A)E7 | (A)E8 | (A)E9 |
|---|---|---|---|---|---|
| Anteil Lithiumphosphat | - | 100 ppm | 150 ppm | 250 ppm | 350 ppm |
| Anteil (A4) | 27 ppm | 18 ppm | 27 ppm | n.b. | n.b. |
| Anteil (A5) | - | 27 ppm | 40 ppm | 67 ppm | 93,5 ppm |
| Onset Temperatur | 147°C | 148°C | 150°C | 157°C | 155°C |
| Offset-Zeit 160°C | 30 min | 30 min | 36 min | 43 min | 46 min |
| Offset-Zeit 175°C | 20 min | 20 min | 22 min | 27 min | 28 min |
| Offset-Zeit 190°C | 15 min | 15 min | 18 min | 19 min | 18 min |
| Tg (CRS) | 88 | 80 | 77 | 56 | 52 |
| Tg (HDG) | 86 | 76 | 64 | 57 | 56 |
| Tg (ALU) | 87 | 84 | 56 | 49 | 48 |

Die Ergebnisse zeigen, dass für das bevorzugte System einer Beschichtungszusammensetzung (A), welche einen Bismut-basierten Katalysator enthält, der Anteil an enthaltenem Phosphor in der Zusammensetzung bevorzugt möglichst niedrig sein sollte. Denn je höher der Anteil von Phosphor ist, desto schlechter ist die Vernetzungsfähigkeit (sichtbar anhand der höheren Onset-Temperatur, der längeren Offset-Zeiten und den niedrigeren Glasübergangstemperaturen).

## Patentansprüche

1. Wässrige Beschichtungszusammensetzung (A) zur zumindest teilweisen Beschichtung eines elektrisch leitfähigen Substrats mit einem Elektrotauchlack, umfassend
(A1) wenigstens ein kathodisch abscheidbares Harz als Bindemittel,
(A2) wenigstens ein Vernetzungsmittel,
(A3) wenigstens 100 ppm Bismut, bezogen auf das Gesamtgewicht der Beschichtungszusammensetzung (A),
**dadurch gekennzeichnet, dass**
(A4) die Beschichtungszusammensetzung Lithium, in einer in (A) gelösten Form, enthält, wobei dieses Lithium einen Anteil von 300 ppm, bezogen auf das Gesamtgewicht der Beschichtungszusammensetzung (A), nicht überschreitet,
wobei die Anteile von (A3) und (A4) mittels Atomemissionsspektrometrie wie in der Beschreibung angegeben bestimmt werden, wobei eine Unterscheidung zwischen Anteil insgesamt, Anteil in gelöster Form und Anteil in ungelöster Form durch Bestimmung des Anteils insgesamt (das heißt der Gesamtprobe) und Bestimmung des Anteils in gelöster Form (nach wie in der Beschreibung angegebener Ultrafiltration und damit des Anteils im Ultrafiltrat) ermittelt werden kann.

2. Wässrige Beschichtungszusammensetzung (A) nach Anspruch 1, **dadurch gekennzeichnet, dass** der Anteil von Lithium (A4) von 2,5 bis 250 ppm, bevorzugt von 12,5 bis 70 ppm, nochmals bevorzugt 12,5 bis 30 ppm, bezogen auf das Gesamtgewicht der Beschichtungszusammensetzung (A), beträgt.

3. Wässrige Beschichtungszusammensetzung (A) nach Anspruch 1 oder 2, **dadurch gekennzeichnet, dass** sie einen Bismut-basierten Vernetzungskatalysator enthält und dass der Bismut-basierte Vernetzungskatalysator in der Komponente (A3) enthalten ist.

4. Wässrige Beschichtungszusammensetzung (A) nach Anspruch 3, **dadurch gekennzeichnet, dass** (A5) der Anteil an Phosphor eine Menge von 100 ppm, bevorzugt 45 ppm, bezogen auf das Gesamtgewicht der Beschichtungszusammensetzung (A), nicht überschreitet, wobei der Anteil von (A5) mittels Atomemissionsspektrometrie wie in der Beschreibung angegeben bestimmt wird, wobei eine Unterscheidung zwischen Anteil insgesamt, Anteil in gelöster Form und Anteil in ungelöster Form durch Bestimmung des Anteils insgesamt (das heißt der Gesamtprobe) und Bestimmung des Anteils in gelöster Form (nach wie in der Beschreibung angegebener Ultrafiltration und damit des Anteils im Ultrafiltrat) ermittelt werden kann.

5. Wässrige Beschichtungszusammensetzung (A) nach Anspruch 1 bis 4, **dadurch gekennzeichnet, dass** (A6) Kupfer enthalten ist.

6. Wässrige Beschichtungszusammensetzung (A) nach Anspruch 5, **dadurch gekennzeichnet, dass** (A6a) Kupfer in einer in (A) gelösten Form enthalten ist und die Menge (A6a) von 5 bis 1000 ppm, bezogen auf das Gesamtgewicht der Beschichtungszusammensetzung (A), beträgt, wobei der Anteil von (A6a) mittels Atomemissionsspektrometrie wie in der Beschreibung angegeben bestimmt wird, wobei eine Unterscheidung zwischen Anteil insgesamt, Anteil in gelöster Form und Anteil in ungelöster Form durch Bestimmung des Anteils insgesamt (das heißt der Gesamtprobe) und Bestimmung des Anteils in gelöster Form (nach wie in der Beschreibung angegebener Ultrafiltration und damit des Anteils im Ultrafiltrat) ermittelt werden.

7. Wässrige Beschichtungszusammensetzung (A) nach Anspruch 1 bis 6, **dadurch gekennzeichnet, dass** die Beschichtungszusammensetzung (A) eine Gesamtmenge von wenigstens 300 ppm Bismut, bezogen auf das Gesamtgewicht der Beschichtungszusammensetzung (A), enthält, wobei davon
(A3a) wenigstens 100 ppm Bismut, bezogen auf das Gesamtgewicht der Beschichtungszusammensetzung (A), in einer in der Beschichtungszusammensetzung (A) gelöst vorliegenden Form und
(A3b) wenigstens 200 ppm Bismut, bezogen auf das Gesamtgewicht der Beschichtungszusammensetzung (A), in einer in der Beschichtungszusammensetzung (A) ungelöst vorliegenden Form vorhanden sind,
wobei die Anteile von (A3a) und (A3b) mittels Atomemissionsspektrometrie wie in der Beschreibung angegeben bestimmt werden, wobei eine Unterscheidung zwischen Anteil insgesamt, Anteil in gelöster Form und Anteil in ungelöster Form durch Bestimmung des Anteils insgesamt (das heißt der Gesamtprobe) und Bestimmung des Anteils in gelöster Form (nach wie in der Beschreibung angegebener Ultrafiltration und damit des Anteils im Ultrafiltrat) ermittelt werden kann.

8. Wässrige Beschichtungszusammensetzung (A) nach Anspruch 1 bis 7, **dadurch gekennzeichnet, dass** die Gesamtmenge des in der Beschichtungszusammensetzung (A) enthaltenen Bismuts in einem Bereich von wenigstens 500 ppm bis 20 000 ppm liegt und die Beschichtungszusammensetzung (A) wenigstens ein zur Komplexierung von Bismut geeignetes wenigstens zweizähniges Komplexierungsmittel (A3aa) enthält.

9. Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit der wässrigen Beschichtungszusammensetzung (A) gemäß einem der Ansprüche 1 bis 8,
wobei Schritt (1) in wenigstens zwei aufeinanderfolgenden Stufen (1a) und (1b) durchgeführt wird, nämlich
(1a) bei einer angelegten Spannung in einem Bereich von 1 bis 50 V, welche über eine Dauer von wenigstens 5 Sekunden angelegt wird, und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

10. Verfahren gemäß Anspruch 9, **dadurch gekennzeichnet, dass** die in Stufe (1a) angelegte Spannung über eine Dauer in einem Bereich von wenigstens 5 bis 300 Sekunden angelegt wird und die in Stufe (1b) angelegte Spannung im Bereich von 50 bis 400 V in einem Zeitintervall von 0 bis 300 Sekunden nach Durchführung der Stufe (1a) erfolgt und für einen Zeitraum im Bereich von 10 bis 300 Sekunden bei einem Wert innerhalb des genannten Spannungsbereichs von 50 bis 400 V aufrechterhalten wird.

11. Verfahren nach Anspruch 10 oder 11, **dadurch gekennzeichnet, dass** das elektrisch leitfähige Substrat hinsichtlich des Metalltyps unterschiedliche Bereiche aufweist, insbesondere mindestens einen Bereich der Stahl-basiert ist und mindestens einen weiteren Bereich der Aluminium-basiert ist.

12. Verfahren nach Anspruch 11, **dadurch gekennzeichnet, dass** die wässrige Beschichtungszusammensetzung (A) Lithium, in einer in (A) gelösten Form (A4) und Kupfer, in einer in (A) gelösten Form (A6a) enthält und der Anteil an (A4) von 12,5 bis 70, bevorzugt 12,5 bis 50, nochmals bevorzugt 12,5 bis 40 ppm liegt und der Anteil an (A6a) von 20 bis 250 ppm liegt, wobei die Anteile von (A4) und (A6a) mittels Atomemissionsspektrometrie wie in der Beschreibung angegeben bestimmt werden, wobei eine Unterscheidung zwischen Anteil insgesamt, Anteil in gelöster Form und Anteil in ungelöster Form durch Bestimmung des Anteils insgesamt (das heißt der Gesamtprobe) und Bestimmung des Anteils in gelöster Form (nach wie in der Beschreibung angegebener Ultrafiltration und damit des Anteils im Ultrafiltrat) ermittelt werden kann.

13. Beschichtetes Substrat, welche nach dem Verfahren gemäß Anspruch 9 bis 12 beschichtet wurde.

14. Bauteil oder Gegenstand, insbesondere Automobilkarosse, welches das beschichtete Substrat nach Anspruch 13 enthält.

## Claims

1. Aqueous coating composition (A) for at least partly coating an electrically conductive substrate with an electrocoat material, comprising
(A1) at least one cathodically depositable resin binder, (A2) at least one crosslinking agent,
(A3) at least 100 ppm of bismuth, based on the total weight of the coating composition (A),
**characterized in that**
(A4) the coating composition comprises lithium, in a form dissolved in (A), said lithium not exceeding a fraction of 300 ppm, based on the total weight of the coating composition (A),
wherein the fractions of (A3) and (A4) are determined by means of atomic emission spectrometry as indicated in the description, wherein a distinction between fraction overall, fraction in dissolved form and fraction in undissolved form can be ascertained by determining the fraction overall (i.e. of the overall sample) and determining the fraction in dissolved form (after ultrafiltration as indicated in the description and thus the fraction in the ultrafiltrate).

2. Aqueous coating composition (A) according to Claim 1, **characterized in that** the fraction of lithium (A4) is from 2.5 to 250 ppm, preferably from 12.5 to 70 ppm, more preferably 12.5 to 30 ppm, based on the total weight of the coating composition (A).

3. Aqueous coating composition (A) according to Claim 1 or 2, **characterized in that** it comprises a bismuth-based crosslinking catalyst and **in that** the bismuth-based crosslinking catalyst is comprised in component (A3).

4. Aqueous coating composition (A) according to Claim 3, **characterized in that** (A5) the fraction of phosphorus does not exceed an amount of 100 ppm, preferably 45 ppm, based on the total weight of the coating composition (A), wherein the fraction of (A5) is determined by means of atomic emission spectrometry as indicated in the description, wherein a distinction between fraction overall, fraction in dissolved form and fraction in undissolved form can be ascertained by determining the fraction overall (i.e. of the overall sample) and determining the fraction in dissolved form (after ultrafiltration as indicated in the description and thus the fraction in the ultrafiltrate).

5. Aqueous coating composition (A) according to Claims 1 to 4, **characterized in that** it comprises (A6) copper.

6. Aqueous coating composition (A) according to Claim 5, **characterized in that** (A6a) copper is present in a form dissolved in (A) and the amount (A6a) is from 5 to 1000 ppm, based on the total weight of the coating composition (A), wherein the fraction of (A6a) is determined by means of atomic emission spectrometry as indicated in the description, wherein a distinction between fraction overall, fraction in dissolved form and fraction in undissolved form is ascertained by determining the fraction overall (i.e. of the overall sample) and determining the fraction in dissolved form (after ultrafiltration as indicated in the description and thus the fraction in the ultrafiltrate).

7. Aqueous coating composition (A) according to Claims 1 to 6, **characterized in that** the coating composition (A) comprises a total amount of at least 300 ppm of bismuth, based on the total weight of the coating composition (A), including
(A3a) at least 100 ppm of bismuth, based on the total weight of the coating composition (A), in a form in which it is in solution in the coating composition (A) and
(A3b) at least 200 ppm of bismuth, based on the total weight of the coating composition (A), in a form in which it is not in solution in the coating composition (A),
wherein the fractions of (A3a) and (A3b) are determined by means of atomic emission spectrometry as indicated in the description, wherein a distinction between fraction overall, fraction in dissolved form and fraction in undissolved form can be ascertained by determining the fraction overall (i.e. of the overall sample) and determining the fraction in dissolved form (after ultrafiltration as indicated in the description and thus the fraction in the ultrafiltrate).

8. Aqueous coating composition (A) according to Claims 1 to 7, **characterized in that** the total amount of the bismuth present in the coating composition (A) is in a range from at least 500 ppm to 20 000 ppm and the coating composition (A) comprises at least one at least bidentate complexing agent (A3aa) suitable for the complexing of bismuth.

9. Method for at least partly coating an electrically conductive substrate with an electrocoat material, comprising at least one step (1),
(1) contacting the electrically conductive substrate, connected as cathode, with the aqueous coating composition (A) according to any of Claims 1 to 8,
step (1) being carried out in at least two successive stages (1a) and (1b), namely
(1a) at an applied voltage in a range from 1 to 50 V, which is applied over a duration of at least 5 seconds, and
(1b) at an applied voltage in a range from 50 to 400 V, with the proviso that the voltage applied in stage (1b) is greater by at least 10 V than the voltage applied in stage (1a).

10. Method according to Claim 9, **characterized in that** the voltage applied in stage (1a) is applied over a duration in a range from at least 5 to 300 seconds, and the voltage applied in stage (1b) in the range from 50 to 400 V takes place in a time interval of 0 to 300 seconds after implementation of stage (1a) and is maintained for a period in the range from 10 to 300 seconds at a value within the stated voltage range of 50 to 400 V.

11. Method according to Claim 10 or 11, **characterized in that** the electrically conductive substrate in relation to the type of metal has different regions, more particularly at least one region which is steel-based and at least one further region which is aluminium-based.

12. Method according to Claim 11, **characterized in that** the aqueous coating composition (A) comprises lithium in a form (A4) dissolved in (A) and copper in a form (A6a) dissolved in (A) and the fraction of (A4) is from 12.5 to 70, preferably 12.5 to 50, more preferably 12.5 to 40 ppm and the fraction of (A6a) is from 20 to 250 ppm, wherein the fractions of (A4) and (A6a) are determined by means of atomic emission spectrometry as indicated in the description, wherein a distinction between fraction overall, fraction in dissolved form and fraction in undissolved form can be ascertained by determining the fraction overall (i.e. of the overall sample) and determining the fraction in dissolved form (after ultrafiltration as indicated in the description and thus the fraction in the ultrafiltrate).

13. Coated substrate coated by the method according to Claims 9 to 12.

14. Component or article, more particularly automobile body, which comprises the coated substrate according to Claim 13.

## Revendications

1. Composition de revêtement aqueuse (A) destinée au revêtement au moins partiel d'un substrat électriquement conducteur avec une peinture pour trempage électrophorétique, comprenant
(A1) au moins une résine pouvant être déposée par procédé cathodique en tant que liant,
(A2) au moins un agent de réticulation,
(A3) au moins 100 ppm de bismuth, par rapport au poids total de la composition de revêtement (A),
**caractérisée en ce que**
(A4) la composition de revêtement contient du lithium sous une forme dissoute dans (A), ce lithium ne dépassant pas une proportion de 300 ppm par rapport au poids total de la composition de revêtement (A),
les proportions de (A3) et (A4) étant déterminées par spectrométrie d'émission atomique comme indiqué dans la description, une distinction pouvant être identifiée entre la proportion totale, la proportion sous forme dissoute et la proportion sous forme non dissoute en déterminant la proportion totale (c'est-à-dire l'échantillon total) et en déterminant la proportion sous forme dissoute (après ultrafiltration comme indiqué dans la description et ainsi la proportion dans l'ultrafiltrat).

2. Composition de revêtement aqueuse (A) selon la revendication 1, **caractérisée en ce que** la proportion de lithium (A4) est comprise entre 2,5 et 250 ppm, de préférence entre 12,5 et 70 ppm, de préférence encore entre 12,5 et 30 ppm, par rapport au poids total de la composition de revêtement (A).

3. Composition de revêtement aqueuse (A) selon la revendication 1 ou 2, **caractérisée en ce qu'**elle contient un catalyseur de réticulation à base de bismuth et **en ce que** le catalyseur de réticulation à base de bismuth est contenu dans la composante (A3).

4. Composition de revêtement aqueuse (A) selon la revendication 3, **caractérisée en ce que** (A5) la proportion de phosphore ne dépasse pas une quantité de 100 ppm, de préférence 45 ppm, par rapport au poids total de la composition de revêtement (A), la proportion de (A5) étant déterminée au moyen d'une spectrométrie d'émission atomique comme indiqué dans la description, une distinction pouvant être identifiée entre la proportion totale, la proportion sous forme dissoute et la proportion sous forme non dissoute en déterminant la proportion totale (c'est-à-dire l'échantillon total) et en déterminant la proportion sous forme dissoute (après ultrafiltration comme indiqué dans la description et donc la proportion dans l'ultrafiltrat).

5. Composition de revêtement aqueuse (A) selon les revendications 1 à 4, **caractérisée en ce que** du cuivre (A6) est contenu.

6. Composition de revêtement aqueuse (A) selon la revendication 5, **caractérisée en ce que** le cuivre (A6a) est contenu dans (A) une forme dissoute et la quantité (A6a) est de 5 à 1000 ppm par rapport par rapport au poids total de la composition de revêtement (A), la proportion de (A6a) étant déterminée au moyen d'une spectrométrie d'émission atomique comme indiqué dans la description, une distinction pouvant être identifiée entre la proportion totale, la proportion sous forme dissoute et la proportion sous forme non dissoute en déterminant la proportion totale (c'est-à-dire l'échantillon total) et en déterminant la proportion sous forme dissoute (après ultrafiltration comme indiqué dans la description et donc la proportion dans l'ultrafiltrat).

7. Composition de revêtement aqueuse (A) selon les revendications 1 à 6, **caractérisée en ce que** la composition de revêtement (A) contient une quantité totale d'au moins 300 ppm de bismuth, par rapport au poids total de la composition de revêtement (A), dont
(A3a) au moins 100 ppm de bismuth, par rapport au poids total de la composition de revêtement (A), sous une forme dissoute dans la composition de revêtement (A) et
(A3b) au moins 200 ppm de bismuth, par rapport au poids total de la composition de revêtement (A), sous une forme non dissoute dans la composition de revêtement (A),
les proportions de (A3a) et (A3b) étant déterminées par spectrométrie d'émission atomique comme indiqué dans la description, une distinction pouvant être identifiée entre la proportion totale, la proportion sous forme dissoute et la proportion sous forme non dissoute en déterminant la proportion totale (c'est-à-dire l'échantillon total) et en déterminant la proportion sous forme dissoute (après ultrafiltration comme indiqué dans la description et ainsi la proportion dans l'ultrafiltrat).

8. Composition de revêtement aqueuse (A) selon les revendications 1 à 7, **caractérisée en ce que** la quantité totale de bismuth contenue dans la composition de revêtement (A) se situe dans une plage comprise entre au moins 500 ppm et 20 000 ppm et la composition de revêtement (A) contient au moins un agent complexant (A3aa) au moins bidenté, approprié pour complexer le bismuth.

9. Procédé pour le revêtement au moins partiel d'un substrat électriquement conducteur avec une peinture pour trempage électrophorétique comprenant au moins une étape (1),
(1) mise en contact du substrat électriquement conducteur branché en tant que cathode avec la composition de revêtement aqueuse (A) selon l'une des revendications 1 à 8,
l'étape (1) étant exécutée en au moins deux étapes successives (1a) et (1b), à savoir
(1a) avec une tension appliquée dans une plage de 1 à 50 V, laquelle est appliquée pendant une durée d'au moins 5 secondes, et
(1b) avec une tension appliquée comprise dans une plage de 50 à 400 V, à la condition que la tension appliquée à l'étape (1b) soit supérieure d'au moins 10 V à la tension appliquée à l'étape (1a).

10. Procédé selon la revendication 9, **caractérisé en ce que** la tension appliquée à l'étape (1a) est appliquée pendant une durée dans une plage de 5 à 300 secondes et la tension appliquée à l'étape (1b) dans la plage de 50 à 400 V est appliquée pendant un intervalle de temps de 0 à 300 secondes après l'exécution de l'étape (1a) et est maintenue pendant une période dans la plage de 10 à 300 secondes avec une valeur incluse dans la plage de tension mentionnée de 50 à 400 V.

11. Procédé selon la revendication 10 ou 11, **caractérisé en ce que** le substrat électriquement conducteur possède différentes zones en fonction du type de métal, en particulier au moins une zone à base d'acier et au moins une zone supplémentaire à base d'aluminium.

12. Procédé selon la revendication 11, **caractérisé en ce que** la composition de revêtement aqueuse (A) contient du lithium, sous une forme (A4) dissoute dans (A) et du cuivre, sous une forme (A6a) dissoute dans (A), et la proportion de (A4) est comprise entre 12,5 et 70, de préférence entre 12,5 et 50, encore de préférence de 12,5 à 40 ppm et la proportion de (A6a) est comprise entre 20 et 250 ppm, les proportions de (A4) et (A6a) étant déterminées par spectrométrie d'émission atomique comme indiqué dans la description, une distinction pouvant être identifiée entre la proportion totale, la proportion sous forme dissoute et la proportion sous forme non dissoute par la détermination de la proportion totale (c'est-à-dire de l'échantillon total) et la détermination de la proportion sous forme dissoute (après ultrafiltration comme indiqué dans la description et donc de la proportion dans l'ultrafiltrat).

13. Substrat revêtu, qui a été revêtu conformément au procédé selon les revendications 9 à 12.

14. Composant ou objet, en particulier carrosserie automobile, qui comprend le substrat revêtu selon la revendication 13.
